# EUROPEAN PATENT APPLICATION

(11) **EP 2 874 338 A1**
(43) Date of publication of application: **20.05.2015**
(21) Application number: 12882092.5
(22) Date of filing: 01.08.2012
(51) Int. Cl.: H04L 1/06

(54) **UPLINK CONTROL INFORMATION REPORTING METHOD AND TERMINAL, AND BASE STATION**

(71) Applicant: Huawei Technologies Co., Ltd., Longgang District Shenzhen, Guangdong 518129 (CN)
(72) Inventor: SUN, Jingyuan, Shenzhen Guangdong 518129 (CN); REN, Xiaotao, Shenzhen Guangdong 518129 (CN); YANG, Jianbing, Shenzhen Guangdong 518129 (CN)
(74) Representative: Maiwald Patentanwalts GmbH
(86) International application number: PCT/CN2012/079521
(87) International publication number: WO 2014/019178

(57) **Abstract**

Embodiments of the present application provide a method for reporting uplink control information, a terminal and a base station. The terminal determines uplink control information needing to be reported, where the uplink control information includes uplink control information needing to be reported currently and uplink control information that needs to be reported previously but has not been reported and is stored by the terminal, so that when the uplink control information fails to be reported completely, the terminal can report partial control information of the uplink control information to the base station according to priority information of the uplink control information, and store the control information that has not been reported in the uplink control information, thereby appropriately relieving the problem that the terminal fails to report the uplink control information for all transmission points jointly serving the terminal due to some reasons when the terminal needs to report the uplink control information.

## Description

### TECHNICAL FIELD

The present application relates to communication technologies, and in particular, to a method for reporting uplink control information, a terminal and a base station.

### BACKGROUND

In a wireless communication system, such as a long term evolution (Long Term Evolution, LTE) system, uplink control information (Uplink Control Information, UCI) reported by a user equipment (User Equipment, UE) to an evolved base station (Evolved NodeB, eNB) is borne on a physical uplink channel. The UCI may include at least one of feedback information of downlink data (that is, ACK information about correctly receiving downlink data or NACK information about incorrectly receiving downlink data), scheduling request (Scheduling Request, SR) information of uplink data and channel status information (Channel Status Information, CSI). Due to introduction of technologies such as coordinated multiple points (Coordinated Multiple Points, CoMP), and carrier aggregation (Carrier Aggregation, CA), multiple transmission points (Transmission Point, TP) may simultaneously serve a terminal. In this case, the terminal needs to report uplink control information for each transmission point.

However, due to some reasons, the terminal may fail to report uplink control information for all transmission points jointly serving the terminal. For example, due to a reason that physical uplink channel resources are limited, the physical uplink channel resources fail to accommodate the uplink control information for all transmission points jointly serving the terminal, and therefore, how to relieve the limitation caused by the problem has become an issue.

### SUMMARY

Multiple aspects of the present application provide a method for reporting uplink control information, a terminal and a base station, so as to appropriately relieve the problem that the terminal fails to report uplink control information for all transmission points jointly serving the terminal due to some reasons when the terminal needs to report the uplink control information.

One aspect of the present application provides a method for reporting uplink control information, including:
determining, by a terminal, uplink control information needing to be reported, where the uplink control information includes uplink control information needing to be reported currently and uplink control information that needs to be reported previously but has not been reported and is stored by the terminal; and
when the uplink control information fails to be reported completely, reporting, by the terminal, partial control information of the uplink control information to a base station according to priority information of the uplink control information, and storing control information that has not been reported in the uplink control information.

According to the foregoing aspect and any possible implementation manner, an implementation manner is further provided, where the uplink control information needing to be reported that is determined by the terminal includes at least one of CSI, scheduling request information of uplink data and feedback information of downlink data.

According to the foregoing aspect and any possible implementation manner, an implementation manner is further provided, where the uplink control information needing to be reported that is determined by the terminal includes at least one set of CSI; the uplink control information needing to be currently reported includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal; and the reporting, by the terminal, partial control information of the uplink control information to a base station according to priority information of the uplink control information, and storing control information that has not been reported in the uplink control information includes:
reporting, by the terminal, at least one information combination of the at least one set of CSI to the base station through a PUCCH according to priority information of the at least one set of CSI, and storing other information, except the at least one information combination, which has not been reported in the at least one set of CSI.

According to the foregoing aspect and any possible implementation manner, an implementation manner is further provided, where before the reporting, by the terminal, partial control information of the uplink control information to a base station according to priority information of the uplink control information, the method further includes:
obtaining, by the terminal, the priority information of the uplink control information.

According to the foregoing aspect and any possible implementation manner, an implementation manner is further provided, where the obtaining, by the terminal, the priority information of the uplink control information includes:
receiving, by the terminal, the priority information of the uplink control information, where the priority information is sent by the base station.

According to the foregoing aspect and any possible implementation manner, an implementation manner is further provided, where the method further includes:
obtaining, by the terminal, time information, where the time information is used for indicating a time length for storing the control information that has not been reported in the uplink control information.

According to the foregoing aspect and any possible implementation manner, an implementation manner is further provided, where the obtaining, by the terminal, time information includes:
receiving, by the terminal, the time information sent by the base station.

According to the foregoing aspect and any possible implementation manner, an implementation manner is further provided, where after the storing, by the terminal, control information that has not been reported in the uplink control information, the method further includes:
dropping, by the terminal according to the time information, the control information that has not been reported in the uplink control information and is stored.

According to the foregoing aspect and any possible implementation manner, an implementation manner is further provided, where the uplink control information includes at least one of the CSI, the scheduling request information of uplink data and the feedback information of downlink data; and the time information corresponds to information included in the uplink control information.

According to the foregoing aspect and any possible implementation manner, an implementation manner is further provided, where the uplink control information includes the CSI; and the time information further corresponds to an information combination corresponding to the CSI.

According to the foregoing aspect and any possible implementation manner, an implementation manner is further provided, where the uplink control information includes the CSI; and the time information further corresponds to an information type included in the CSI.

According to the foregoing aspect and any possible implementation manner, an implementation manner is further provided, where before the storing, by the terminal, control information that has not been reported in the uplink control information, the method further includes:
obtaining, by the terminal, indication information, where the indication information is used for instructing to store the control information that has not been reported in the uplink control information.

According to the foregoing aspect and any possible implementation manner, an implementation manner is further provided, where the obtaining, by the terminal, indication information includes:
receiving, by the terminal, the indication information sent by the base station.

Another aspect of the present application provides a method for reporting uplink control information, including:
determining, by a base station, uplink control information needing to be reported by a terminal, where the uplink control information includes uplink control information needing to be reported currently and uplink control information that needs to be reported previously but has not been reported and is stored by the terminal; and
when the uplink control information fails to be reported completely, receiving, by the base station according to priority information of the uplink control information, partial control information reported by the terminal in the uplink control information, and determining control information that has not been reported in the uplink control information and is stored by the terminal.

According to the foregoing aspect and any possible implementation manner, an implementation manner is further provided, where the uplink control information, needing to be reported by the terminal, that is determined by the base station includes at least one of CSI, scheduling request information of uplink data and feedback information of downlink data.

According to the foregoing aspect and any possible implementation manner, an implementation manner is further provided, where the uplink control information, needing to be reported by the terminal, that is determined by the base station includes at least one set of CSI; the uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal; and the receiving, by the base station according to priority information of the uplink control information, partial control information reported by the terminal in the uplink control information, and determining control information that has not been reported in the uplink control information and is stored by the terminal includes:
receiving, by the base station according to priority information of the at least one set of CSI, at least one information combination of the at least one set of CSI, where the at least one information combination is reported by the terminal through a PUCCH, and determining other information, except the at least one information combination, which has not been reported in the at least one set of CSI and is stored by the terminal.

According to the foregoing aspect and any possible implementation manner, an implementation manner is further provided, where before the receiving, by the base station according to priority information of the uplink control information, partial control information reported by the terminal in the uplink control information, the method further includes:
sending, by the base station, the priority information of the uplink control information to the terminal.

According to the foregoing aspect and any possible implementation manner, an implementation manner is further provided, where before, when or after the determining, by the base station, control information that has not been reported in the uplink control information and is stored by the terminal, the method further includes:
sending, by the base station, time information to the terminal, where the time information is used for indicating a time length for storing the control information that has not been reported in the uplink control information, so that the terminal drops, according to the time information, the control information that has not been reported in the uplink control information and is stored.

According to the foregoing aspect and any possible implementation manner, an implementation manner is further provided, where the uplink control information includes at least one of the CSI, the scheduling request information of uplink data and the feedback information of downlink data; and the time information corresponds to information included in the uplink control information.

According to the foregoing aspect and any possible implementation manner, an implementation manner is further provided, where the uplink control information includes the CSI; and the time information further corresponds to an information combination corresponding to the CSI.

According to the foregoing aspect and any possible implementation manner, an implementation manner is further provided, where the uplink control information includes the CSI; and the time information further corresponds to an information type included in the CSI.

According to the foregoing aspect and any possible implementation manner, an implementation manner is further provided, where before the determining, by the base station, control information that has not been reported in the uplink control information and is stored by the terminal, the method further includes:
sending, by the base station, indication information to the terminal, where the indication information is used for instructing the terminal to store the control information that has not been reported in the uplink control information.

Another aspect of the present application provides a terminal, including:
a determining unit, configured to determine uplink control information needing to be reported, where the uplink control information includes uplink control information needing to be reported currently and uplink control information that needs to be reported previously but has not been reported and is stored by the terminal;
a processing unit, configured to: when the uplink control information determined by the determining unit fails to be reported completely, determine, according to priority information of the uplink control information, partial control information reported in the uplink control information, and determine control information that has not been reported in the uplink control information;
a sending unit, configured to report the partial control information determined by the processing unit in the uplink control information to a base station; and
a storage unit, configured to store the control information that has not been reported in the uplink control information and is determined by the processing unit.

According to the foregoing aspect and any possible implementation manner, an implementation manner is further provided, where the uplink control information that needs to be reported and is determined by the determining unit includes at least one of CSI, scheduling request information of uplink data and feedback information of downlink data.

According to the foregoing aspect and any possible implementation manner, an implementation manner is further provided, where the uplink control information that needs to be reported and is determined by the determining unit includes at least one set of CSI; the uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal;
the processing unit is specifically configured to determine, according to priority information of the at least one set of CSI, at least one information combination reported in the at least one set of CSI, and determine other information, except the at least one information combination, which has not been reported in the at least one set of CSI;
the sending unit is specifically configured to report the at least one information combination determined by the processing unit in the at least one set of CSI to the base station through a PUCCH; and
the storage unit is specifically configured to store the other information, except the at least one information combination, which has not been reported in the at least one set of CSI and is determined by the processing unit.

According to the foregoing aspect and any possible implementation manner, an implementation manner is further provided, where the terminal further includes a receiving unit, configured to:
obtain the priority information of the uplink control information.

According to the foregoing aspect and any possible implementation manner, an implementation manner is further provided, where the receiving unit is specifically configured to:
receive the priority information of the uplink control information, where the priority information is sent by the base station.

According to the foregoing aspect and any possible implementation manner, an implementation manner is further provided, where the receiving unit is further configured to:
obtain time information, where the time information is used for indicating a time length for storing the control information that has not been reported in the uplink control information.

According to the foregoing aspect and any possible implementation manner, an implementation manner is further provided, where the receiving unit is specifically configured to:
receive the time information sent by the base station.

According to the foregoing aspect and any possible implementation manner, an implementation manner is further provided, where the processing unit is further configured to:
instruct, according to the time information, the storage unit to drop the control information that has not been reported in the uplink control information and is stored.

According to the foregoing aspect and any possible implementation manner, an implementation manner is further provided, where the uplink control information includes at least one of the CSI, the scheduling request information of uplink data and the feedback information of downlink data; and the time information corresponds to information included in the uplink control information.

According to the foregoing aspect and any possible implementation manner, an implementation manner is further provided, where the uplink control information includes the CSI; and the time information further corresponds to an information combination corresponding to the CSI.

According to the foregoing aspect and any possible implementation manner, an implementation manner is further provided, where the uplink control information includes the CSI; and the time information further corresponds to an information type included in the CSI.

According to the foregoing aspect and any possible implementation manner, an implementation manner is further provided, where the receiving unit is further configured to:
obtain indication information, where the indication information is used for instructing to store the control information that has not been reported in the uplink control information.

According to the foregoing aspect and any possible implementation manner, an implementation manner is further provided, where the receiving unit is specifically configured to:
receive the indication information sent by the base station.

Another aspect of the present application provides a base station, including:
a determining unit, configured to determine uplink control information needing to be reported by a terminal, where the uplink control information includes uplink control information needing to be reported currently and uplink control information that needs to be reported previously but has not been reported and is stored by the terminal;
a processing unit, configured to: when the uplink control information determined by the determining unit fails to be reported completely, determine, according to priority information of the uplink control information, partial control information reported in the uplink control information, and determine control information that has not been reported in the uplink control information and is stored by the terminal; and
a receiving unit, configured to receive, according to the partial control information determined by the processing unit in the uplink control information, partial control information reported by the terminal in the uplink control information.

According to the foregoing aspect and any possible implementation manner, an implementation manner is further provided, where the uplink control information that needs to be reported by the terminal and is determined by the determining unit includes at least one of CSI, scheduling request information of uplink data and feedback information of downlink data.

According to the foregoing aspect and any possible implementation manner, an implementation manner is further provided, where the uplink control information that needs to be reported by the terminal and is determined by the determining unit includes at least one set of CSI; the uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal;
the processing unit is specifically configured to determine, according to priority information of the at least one set of CSI, at least one information combination reported in the at least one set of CSI, and determine other information, except the at least one information combination, which has not been reported in the at least one set of CSI;
the receiving unit is specifically configured to receive, according to the at least one information combination reported in the at least one set of CSI and determined by the processing unit, at least one information combination of the at least one set of CSI, where the at least one information combination is reported by the terminal through a PUCCH; and
the determining unit is specifically configured to determine, according to the other information, except the at least one information combination, which has not been reported in the at least one set of CSI and is determined by the processing unit, other information, except the at least one information combination, which has not been reported in the at least one set of CSI and is stored by the terminal.

According to the foregoing aspect and any possible implementation manner, an implementation manner is further provided, where the base station further includes a sending unit, configured to:
send the priority information of the uplink control information to the terminal.

According to the foregoing aspect and any possible implementation manner, an implementation manner is further provided, where the sending unit is further configured to:
send time information to the terminal, where the time information is used for indicating a time length for storing the control information that has not been reported in the uplink control information, so that the terminal drops, according to the time information, the control information that has not been reported in the uplink control information and is stored.

According to the foregoing aspect and any possible implementation manner, an implementation manner is further provided, where the uplink control information includes at least one of the CSI, the scheduling request information of uplink data and the feedback information of downlink data; and the time information corresponds to information included in the uplink control information.

According to the foregoing aspect and any possible implementation manner, an implementation manner is further provided, where the uplink control information includes the CSI; and the time information further corresponds to an information combination corresponding to the CSI.

According to the foregoing aspect and any possible implementation manner, an implementation manner is further provided, where the uplink control information includes the CSI; and the time information further corresponds to an information type included in the CSI.

According to the foregoing aspect and any possible implementation manner, an implementation manner is further provided, where the sending unit is further configured to:
send indication information to the terminal, where the indication information is used for instructing the terminal to store the control information that has not been reported in the uplink control information.

Another aspect of the present application provides a terminal, including:
a processor, configured to determine uplink control information needing to be reported, where the uplink control information includes uplink control information needing to be reported currently and uplink control information that needs to be reported previously but has not been reported and is stored by the terminal; and when the uplink control information fails to be reported completely, determine, according to priority information of the uplink control information, partial control information reported in the uplink control information, and determine control information that has not been reported in the uplink control information;
a transmitter, configured to report the partial control information determined by the processor in the uplink control information to a base station; and
a memory, configured to store the control information that has not been reported in the uplink control information and is determined by the processor.

According to the foregoing aspect and any possible implementation manner, an implementation manner is further provided, where the uplink control information that needs to be reported and is determined by the processor includes at least one of CSI, scheduling request information of uplink data and feedback information of downlink data.

According to the foregoing aspect and any possible implementation manner, an implementation manner is further provided, where the uplink control information that needs to be reported and is determined by the processor includes at least one set of CSI; the uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal;
the processor is specifically configured to determine, according to priority information of the at least one set of CSI, at least one information combination reported in the at least one set of CSI, and determine other information, except the at least one information combination, which has not been reported in the at least one set of CSI;
the transmitter is specifically configured to report the at least one information combination determined by the processor in the at least one set of CSI to the base station through a PUCCH; and
the memory is specifically configured to store the other information, except the at least one information combination, which has not been reported in the at least one set of CSI and is determined by the processor.

According to the foregoing aspect and any possible implementation manner, an implementation manner is further provided, where the terminal further includes a receiver, configured to:
obtain the priority information of the uplink control information.

According to the foregoing aspect and any possible implementation manner, an implementation manner is further provided, where the receiver is specifically configured to:
receive the priority information of the uplink control information, where the priority information is sent by the base station.

According to the foregoing aspect and any possible implementation manner, an implementation manner is further provided, where the receiver is further configured to:
obtain time information, where the time information is used for indicating a time length for storing the control information that has not been reported in the uplink control information.

According to the foregoing aspect and any possible implementation manner, an implementation manner is further provided, where the receiver is specifically configured to:
receive the time information sent by the base station.

According to the foregoing aspect and any possible implementation manner, an implementation manner is further provided, where the processor is further configured to:
instruct, according to the time information, the memory to drop the control information that has not been reported in the uplink control information and is stored.

According to the foregoing aspect and any possible implementation manner, an implementation manner is further provided, where the uplink control information includes at least one of the CSI, the scheduling request information of uplink data and the feedback information of downlink data; and the time information corresponds to information included in the uplink control information.

According to the foregoing aspect and any possible implementation manner, an implementation manner is further provided, where the uplink control information includes the CSI; and the time information further corresponds to an information combination corresponding to the CSI.

According to the foregoing aspect and any possible implementation manner, an implementation manner is further provided, where the uplink control information includes the CSI; and the time information further corresponds to an information type included in the CSI.

According to the foregoing aspect and any possible implementation manner, an implementation manner is further provided, where the receiver is further configured to:
obtain indication information, where the indication information is used for instructing to store the control information that has not been reported in the uplink control information.

According to the foregoing aspect and any possible implementation manner, an implementation manner is further provided, where the receiver is specifically configured to:
receive the indication information sent by the base station.

Another aspect of the present application provides a base station, including:
a processor, configured to determine uplink control information needing to be reported by a terminal, where the uplink control information includes uplink control information needing to be reported currently and uplink control information that needs to be reported previously but has not been reported and is stored by the terminal, and configured to: when the uplink control information fails to be reported completely, determine, according to priority information of the uplink control information, partial control information reported in the uplink control information, and determine control information that has not been reported in the uplink control information and is stored by the terminal; and
a receiver, configured to receive, according to the partial control information determined by the processor in the uplink control information, partial control information reported by the terminal in the uplink control information.

According to the foregoing aspect and any possible implementation manner, an implementation manner is further provided, where the uplink control information that needs to be reported by the terminal and is determined by the processor includes at least one of CSI, scheduling request information of uplink data and feedback information of downlink data.

According to the foregoing aspect and any possible implementation manner, an implementation manner is further provided, where the uplink control information that needs to be reported by the terminal and is determined by the processor includes at least one set of CSI; the uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal;
the processor is specifically configured to determine, according to priority information of the at least one set of CSI, at least one information combination reported in the at least one set of CSI, and determine other information, except the at least one information combination, which has not been reported in the at least one set of CSI;
the receiver is specifically configured to receive, according to the at least one information combination reported in the at least one set of CSI and determined by the processor, at least one information combination of the at least one set of CSI, where the at least one information combination is reported by the terminal through a PUCCH; and
the processor is specifically configured to determine, according to the other information, except the at least one information combination, which has not been reported in the at least one set of CSI and is determined by the processor, other information, except the at least one information combination, which has not been reported in the at least one set of CSI and is stored by the terminal.

According to the foregoing aspect and any possible implementation manner, an implementation manner is further provided, where the base station further includes a transmitter, configured to:
send the priority information of the uplink control information to the terminal.

According to the foregoing aspect and any possible implementation manner, an implementation manner is further provided, where the transmitter is further configured to:
send time information to the terminal, where the time information is used for indicating a time length for storing the control information that has not been reported in the uplink control information, so that the terminal drops, according to the time information, the control information that has not been reported in the uplink control information and is stored.

According to the foregoing aspect and any possible implementation manner, an implementation manner is further provided, where the uplink control information includes at least one of the CSI, the scheduling request information of uplink data and the feedback information of downlink data; and the time information corresponds to information included in the uplink control information.

According to the foregoing aspect and any possible implementation manner, an implementation manner is further provided, where the uplink control information includes the CSI; and the time information further corresponds to an information combination corresponding to the CSI.

According to the foregoing aspect and any possible implementation manner, an implementation manner is further provided, where the uplink control information includes the CSI; and the time information further corresponds to an information type included in the CSI.

According to the foregoing aspect and any possible implementation manner, an implementation manner is further provided, where the transmitter is further configured to:
send indication information to the terminal, where the indication information is used for instructing the terminal to store the control information that has not been reported in the uplink control information.

As can be known from the foregoing technical solutions, in the embodiments of the present application, the terminal determines the uplink control information needing to be reported, where the uplink control information includes the uplink control information needing to be reported currently and the uplink control information that needs to be reported previously but has not been reported and is stored by the terminal, so that when the uplink control information fails to be reported completely, the terminal can report the partial control information of the uplink control information to the base station according to the priority information of the uplink control information, and store the control information that has not been reported in the uplink control information, thereby appropriately relieving the problem that the terminal fails to report the uplink control information for all transmission points jointly serving the terminal due to some reasons when the terminal needs to report the uplink control information.

### BRIEF DESCRIPTION OF DRAWINGS

To illustrate the technical solutions in the embodiments of the present application or in the prior art more clearly, the following briefly introduces the accompanying drawings required for describing the embodiments or the prior art. Apparently, the accompanying drawings in the following description show merely some embodiments of the present application, and persons of ordinary skill in the art may still derive other drawings from these accompanying drawings without creative efforts.
FIG. 1 is a schematic flow chart of a method for reporting uplink control information according to an embodiment of the present application;
FIG. 2 is a schematic flow chart of a method for reporting uplink control information according to another embodiment of the present application;
FIG. 3 is a schematic structural diagram of a terminal according to another embodiment of the present application;
FIG. 4 is a schematic structural diagram of a terminal according to another embodiment of the present application;
FIG. 5 is a schematic structural diagram of a base station according to another embodiment of the present application;
FIG. 6 is a schematic structural diagram of a base station according to another embodiment of the present application;
FIG. 7 is a schematic structural diagram of a terminal according to another embodiment of the present application;
FIG. 8 is a schematic structural diagram of a terminal according to another embodiment of the present application;
FIG. 9 is a schematic structural diagram of a base station according to another embodiment of the present application; and
FIG. 10 is a schematic structural diagram of a base station according to another embodiment of the present application.

### DESCRIPTION OF EMBODIMENTS

To make the objectives, technical solutions, and advantages of the embodiments of the present application clearer, the following clearly and comprehensively describes the technical solutions in the embodiments of the present application with reference to the accompanying drawings in the embodiments of the present application. Apparently, the described embodiments are merely a part rather than all of the embodiments of the present application. All other embodiments obtained by persons of ordinary skill in the art based on the embodiments of the present application without creative efforts shall fall within the protection scope of the present application.

In the present application, multiple transmission points (Transmission Point, TP) may simultaneously serve a terminal. A TP may include but is not limited to an access point (Access Point, AP), a base station, a cell under a base station, a carrier frequency, a carrier, a remote radio equipment (Remote Radio Equipment, RRE), a remote radio head (Remote Radio Head, RRH), a remote radio unit (Remote Radio Unit, RRU) or a home base station (Femto cell, Home NodeB, HNB or Home eNodeB, HeNB).

In addition, the term "and/or" in this specification merely describes a correlation of associated objects, which represents that three relationships exist. For example, A and/or B may represent the following three situations: only A exists; A and B exist simultaneously; and only B exists. In addition, the character "/" in this specification usually represents that the former and later associated objects are in an "or" relationship.

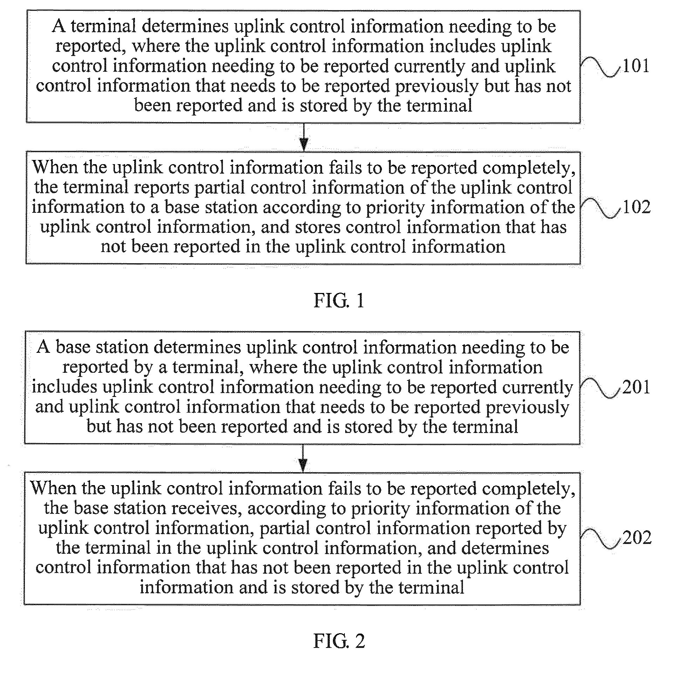

As shown in FIG. 1, FIG. 1 is a schematic flow chart of a method for reporting uplink control information according to an embodiment of the present application.

101: A terminal determines uplink control information needing to be reported, where the uplink control information includes uplink control information needing to be reported currently and uplink control information that needs to be reported previously but has not been reported and is stored by the terminal.

102: When the uplink control information fails to be reported completely, the terminal reports partial control information of the uplink control information to a base station according to priority information of the uplink control information, and stores control information that has not been reported in the uplink control information.

Optionally, in a possible implementation manner of this embodiment, in 101, the terminal specifically may determine, according to reporting-related configuration information of uplink control information and/or reporting requirements of the uplink control information, the uplink control information needing to be reported currently, and may also determine, according to the uplink control information that needs to be reported previously but has not been reported and is stored by the terminal, the uplink control information that needs to be reported previously but has not been reported.

It should be noted that, that the uplink control information fails to be reported completely may be understood as that collision occurs between the uplink control information needing to be reported currently and the uplink control information that needs to be reported previously but has not been reported and is stored by the terminal. For example, collision occurs on a current sub-frame between multiple pieces of uplink control information needing to be reported currently and/or multiple pieces of uplink control information that needs to be reported previously but has not been reported.

The uplink control information needing to be reported that is determined by the terminal may include but is not limited to at least one of CSI, scheduling request information of uplink data and feedback information of downlink data.

It may be understood that, the CSI may include CSI measured by the terminal under various assumption situations.

Optionally, in a possible implementation manner of this embodiment, the CSI may include at least one of a rank indicator (Rank Indicator, RI), a precoding matrix indicator (Precoding Matrix Indicator, PMI) and a channel quality indicator (Channel Quality Indicator, CQI).

Optionally, the uplink control information that needs to be reported previously but has not been reported and is stored by the terminal refers to uplink control information that is determined, according to a parameter related with reporting the uplink control information, to be reported on a sub-frame previously but has not been reported due to collision with other uplink control information. In this embodiment, the uplink control information that needs to be reported previously but has not been reported is not dropped (drop), but is stored. When the terminal reports uplink control information next, a priority of the uplink control information to be reported next is compared with a priority of other uplink control information that needs to be reported on a sub-frame corresponding to the next reporting, so as to determine uplink control information to be reported next.

It should be noted that, in 102, the terminal specifically may report partial control information with the highest priority in the uplink control information to the base station, and store control information that has not been reported in the uplink control information.

Optionally, in a possible implementation manner of this embodiment, before 102, the terminal may further obtain the priority information of the uplink control information.

Specifically, the terminal specifically may receive the priority information of the uplink control information, where the priority information is sent by the base station. Specifically, the terminal specifically may receive the priority information of the uplink control information, where the priority information is sent by the base station through high-level signaling or a control channel.

For example, the high-level signaling may be a radio resource control (Radio Resource Control, RRC) message. Specifically the priority information of the uplink control information may be carried through an information element (Information Element, IE) of the RRC message. The RRC message may be an RRC message in the prior art, such as an RRC connection reconfiguration (RRC CONNECTION RECONFIGURATION) message, which is not limited in this embodiment. The priority information of the uplink control information is carried by extending an IE of an existing RRC message, or the RRC message may also be different from the existing RRC message in the prior art.

For another example, the high-level signaling may be a media access control (Media Access Control, MAC) control element (Control Element, CE) message, and specifically, the priority information of the uplink control information may also be carried by adding a new MAC CE message.

For another example, the control channel may be a physical downlink control channel (Physical Downlink Control Channel, PDCCH). Specifically, the terminal may receive the priority information of the uplink control information, where the priority information is sent by the base station to the terminal through a PDCCH, or the priority information is sent by the base station through a PDCCH to a group to which the terminal belongs.

Optionally, in a possible implementation manner of this embodiment, the terminal does not need to receive the priority information of the uplink control information, where the priority information is sent by the base station, but instead the terminal may directly obtain, through preconfiguration, the priority information of the uplink control information, such as protocol agreement.

Optionally, in a possible implementation manner of this embodiment, before, when or after the terminal stores the control information that has not been reported in the uplink control information, the terminal may further obtain time information, where the time information is used for indicating a time length for storing the control information that has not been reported in the uplink control information.

Specifically, the terminal receives the time information sent by the base station. Specifically, the terminal may receive the time information that is sent by the base station through high-level signaling or a control channel.

For example, the high-level signaling may be a radio resource control (Radio Resource Control, RRC) message. Specifically the time information may be carried through an information element (Information Element, IE) of the RRC message. The RRC message may be an RRC message in the prior art, such as an RRC connection reconfiguration (RRC CONNECTION RECONFIGURATION) message, which is not limited in this embodiment. The time information is carried by extending an IE of an existing RRC message, or the RRC message may also be different from the existing RRC message in the prior art.

For another example, the high-level signaling may be a media access control (Media Access Control, MAC) control element (Control Element, CE) message, and specifically, the time information may also be carried by adding a new MAC CE message.

For another example, the control channel may be a physical downlink control channel (Physical Downlink Control Channel, PDCCH). Specifically, the terminal may receive the time information that is sent by the base station to the terminal through a PDCCH, or may also receive the time information that is sent by the base station through a PDCCH to a group to which the terminal belongs.

Optionally, in a possible implementation manner of this embodiment, the terminal may also not need to receive the time information sent by the base station, and but instead, may directly obtain, through preconfiguration, the time information, such as protocol agreement.

Correspondingly, after the terminal stores the control information that has not been reported in the uplink control information, the terminal may further drop, according to the time information, the control information that has not been reported in the uplink control information and is stored, when time for storing the control information that has not been reported in the uplink control information exceeds time indicated by the time information.

Specifically, if the uplink control information includes at least one of the CSI, the scheduling request information of uplink data and the feedback information of downlink data, the time information may respectively correspond to information included in the uplink control information.

For example, the time information may respectively correspond to the CSI, the scheduling request information of uplink data and the feedback information of downlink data, that is, the time information may indicate time t1 for storing the CSI, may also indicate time t2 for storing the scheduling request information of uplink data, and may also indicate time t3 for storing the feedback information of downlink data.

Specifically, when the uplink control information includes CSI, the time information may further correspond to an information combination corresponding to the CSI. For example, the time information may further respectively correspond to a type corresponding to the CSI, namely, a CSI Type. That is, the time information may indicate time t1 for storing CSI Type 1, namely, a sub-band CQI selected by the terminal; may also indicate time t1' for storing CSI Type 1a, namely, a sub-band CQI and a second PMI; may also indicate time t2 for storing CSI Type 2, namely, a broadband CQI and a broadband PMI, for storing CSI Type 2b, namely, a broadband CQI and a broadband second PMI, and for storing CSI Type 2c, namely, a broadband CQI, a first PMI and a broadband second PMI; may also indicate time t2' for storing CSI Type 2a, namely, a broadband PMI; may also indicate time t3 for storing CSI Type 3, namely, an RI; may also indicate time t4 for storing CSI Type 4, namely, a broadband CQI; may also indicate time t5 for storing CSI Type 5, namely, an RI and a broadband PMI; and may also indicate time t6 for storing CSI Type 6, namely, an RI and a precoding type indication (Precoder Type Indication, PTI); and so on.

Specifically, when the uplink control information includes the CSI, the time information may further correspond to an information type included in the CSI. For example, the time information may also further respectively correspond to a type included in the CSI. That is, the time information may indicate time t1 for storing an RI; may also indicate time t2 for storing a broadband CQI; may also indicate time t3 for storing a broadband PMI; and may also indicate time t4 for storing a sub-band CQI; and so on.

Optionally, in a possible implementation manner of this embodiment, before the terminal stores the control information that has not been reported in the uplink control information, the terminal may further obtain indication information, where the indication information is used for instructing to store the control information that has not been reported in the uplink control information.

Specifically, the terminal receives the indication information sent by the base station. Specifically, the terminal specifically may receive the indication information that is sent by the base station through high-level signaling or a control channel.

For example, the high-level signaling may be a radio resource control (Radio Resource Control, RRC) message. Specifically the indication information may be carried through an information element (Information Element, IE) of the RRC message. The RRC message may be an RRC message in the prior art, such as an RRC connection reconfiguration (RRC CONNECTION RECONFIGURATION) message, which is not limited in this embodiment. The indication information is carried by extending an IE of an existing RRC message, or the RRC message may also be different from the existing RRC message in the prior art.

For another example, the high-level signaling may be a media access control (Media Access Control, MAC) control element (Control Element, CE) message, and specifically, the indication information may also be carried by adding a new MAC CE message.

For another example, the control channel may be a physical downlink control channel (Physical Downlink Control Channel, PDCCH). Specifically, the terminal may receive the indication information that is sent by the base station to the terminal through a PDCCH, or may also receive the indication information that is sent by the base station through a PDCCH to a group to which the terminal belongs.

Optionally, in a possible implementation manner of this embodiment, the terminal may also not need to receive the indication information sent by the base station, but instead, may directly obtain, through preconfiguration, the indication information, such as protocol agreement.

In order to make the method provided by the embodiment of the present application clearer, the following takes it as an example that the uplink control information needing to be reported that is determined by the terminal on a sub-frame on which periodic CSI reporting is performed includes at least one set of CSI. The uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal. At this time, the CSI needing to be reported on the current sub-frame is at least one information combination in the at least one set of CSI, and the CSI that needs to be reported on another sub-frame before the current sub-frame but has not been reported is at least one information combination in the at least one set of CSI.

It should be noted that, the at least one information combination reported by the terminal to the base station in the at least one set of CSI may be an information combination in one set of CSI, or may also be a combination of information in multiple sets of CSI, which is not limited in this embodiment.

It should be noted that, an information combination that a UE needs to report to an eNodeB may be a CSI Type, or may also be a combination of information types included in the CSI, such as one or more CQIs, PMIs, and RIs. The following only takes the CSI Type as an example.

Correspondingly, if the uplink control information needing to be reported that is determined by the terminal includes one set of CSI, in 102, the terminal specifically may report at least one information combination, such as CSI Type 1 or CSI Type 3, in the one set of CSI to the base station through a physical uplink control channel (Physical Uplink Control Channel, PUCCH) according to priority information of the information combination in the one set of CSI, such as priority information of a CSI Type, and store other information except the at least one information combination in the one set of CSI.

Correspondingly, if the uplink control information needing to be reported that is determined by the terminal includes at least two sets of CSI, in 102, the terminal specifically may report at least one information combination (such as CSI Type 1 or CSI Type 3) in the at least two sets of CSI to the base station through a physical uplink control channel (Physical Uplink Control Channel, PUCCH) according to priority information of the at least two sets of CSI, such as priority information of a CSI Type, and store other information, except the at least one information combination, which has not been reported in the at least one set of CSI.

For example, the priority information of the at least two sets of CSI may be a priority of an information combination of each of the sets of CSI. For another example, when the priorities of information combinations in all the sets of CSI are the same, the priority information of the at least two sets of CSI may be the priority of the at least two sets of CSI.

If the UE is configured with one PUCCH, that is to say, on the sub-frame on which periodic CSI reporting is performed, the UE only can report the uplink control information through the configured PUCCH. The terminal specifically may report an information combination (such as a CSI Type) in a specified amount (such as one piece or several pieces) of CSI to the eNodeB through the configured PUCCH.

For example, assuming that the terminal specifically may report one CSI Type to the eNodeB through the configured PUCCH. On a sub-frame where a reporting moment is located, when collision occurs between RIs (that is, RI1 and RI2) included in the two sets of CSI (that is, CSI1 and CSI2) (that is, the RIs included in the two sets of CSI need to be reported on the sub-frame), assuming that a priority of RI1 is higher than a priority of RI2, the UE may report RI1 to the eNodeB on the sub-frame through the configured PUCCH, and store RI2. Content that needs to be reported on a sub-frame where a next reporting moment is located includes: a broadband CQI1 included in CSI1 at this reporting moment, a broadband CQI2 included in CSI2 at this reporting moment and RI2 stored at a previous reporting moment. Assuming that the priority of RI2 is higher than that of CQI1 and CQI2, the UE may report RI2 to the eNodeB on the sub-frame through the configured PUCCH, and store CQI1 and CQI2. By analogy, it can be implemented that on the sub-frame on which periodic CSI reporting is performed, the UE reports one CSI Type in CSI where collision occurs.

Specifically, when a PUCCH (that is, PUCCH1) on which CSI Type3 or CSI Type5 or CSI Type6 of one set of CSI is fed back collides with a PUCCH (that is, PUCCH2) on which CSI Type1 or CSI Type1a or CSI Type2 or CSI Type2a or CSI Type2b or CSI Type2c or CSI Type 4 of the same set of CSI is fed back, content fed back on the latter (that is, PUCCH2) is stored because a priority of the content is lower, and therefore, only content of the former (that is, PUCCH1) is fed back. Content fed back on one PUCCH is one CSI Type.

When the UE is configured with more than one set of CSI, the UE only feeds back one set of CSI in one sub-frame. Then, in one sub-frame, when a PUCCH (that is, PUCCH3) on which CSI Type3 or CSI Type5 or CSI Type6 or CSI Type2a of one set of CSI is fed back collides with a PUCCH (that is, PUCCH4) on which CSI Type1 or CSI Type1a or CSI Type2 or CSI Type2b or CSI Type2c or CSI Type 4 of another set of CSI is fed back, content fed back on the latter (that is, PUCCH4) is stored because a priority of the content is lower, and therefore, only content of the former (that is, PUCCH3) is fed back. In one sub-frame, when a PUCCH (that is, PUCCH5) on which CSI Type2 or CSI Type2b or CSI Type2c or CSI Type4 of one set of CSI is fed back collides with a PUCCH (that is, PUCCH6) on which CSI Type1 or CSI Type1a of another set of CSI is fed back, content fed back on the latter (that is, PUCCH6) is stored because a priority of the content is lower, and therefore, only content of the former (that is, PUCCH5) is fed back.

It should be noted that, a priority of content, namely, a CSI Type, fed back on a PUCCH may be determined according to the Type, and priorities are different when Types are different. If the Types are the same, the priority of the content fed back on the PUCCH may further be determined according to an index number of the CSI to which the Types belong, and the priorities are different when the index numbers of the CSI are different. If the Types are the same, the CSI to which the Types belong is the same, and the priority of the content fed back on the PUCCH may further be determined according to an index number of a sub-frame or bandwidth part (Bandwidth Part, BP) corresponding to the Type, and the priorities are different when the index numbers of the sub-frames or BPs are different.

If the UE is configured with multiple PUCCHs, that is, on the sub-frame on which periodic CSI reporting is performed, the UE can only report a specified quantity (such as one or several) of CSI Types to the eNodeB through each PUCCH of the configured multiple PUCCHs.

It should be noted that, if the UE is configured with multiple PUCCHs, for each PUCCH of the multiple PUCCHs, specifically, the UE may report a specified quantity (such as one or several) of CSI Types to the eNodeB through each PUCCH according to priority information of the CSI independently; or, for multiple PUCCHs, the UE may report a specified quantity (such as one or several) of CSI Types to the eNodeB through each PUCCH according to priority information of the CSI jointly.

It should be noted that, on the sub-frame on which periodic CSI reporting is performed, the terminal may also adopt similar methods to implement that, on the sub-frame on which periodic CSI reporting is performed, the UE reports, through a physical uplink shared channel (Physical Uplink Shared Channel, PUSCH) or another uplink channel, one or more CSI Types in the CSI where collision occurs, and stores a CSI Type that cannot be reported.

It should be noted that, on a sub-frame on which aperiodic CSI reporting is performed, the terminal may also adopt similar methods to implement that, on the sub-frame on which aperiodic CSI reporting is performed, the UE reports, through a PUSCH or another uplink channel, one or more CSI Types in the CSI where collision occurs, and stores a CSI Type that cannot be reported.

It should be noted that, on a sub-frame on which periodic CSI reporting and aperiodic CSI reporting are performed, for periodic CSI reporting and aperiodic CSI reporting, specifically, the UE may report a specified quantity (such as one or several) of CSI Types to the eNodeB through each PUCCH or each PUSCH according to priority information of the CSI independently; or, for periodic CSI reporting and aperiodic CSI reporting, the UE may report a specified quantity (such as one or several) of CSI Types to the eNodeB through each PUCCH or each PUSCH according to priority information of the CSI jointly, and store a CSI Type that cannot be reported.

It should be noted that, the terminal specifically may report, to the base station, one or more CSI Types with the highest priority in the CSI where collision occurs, and store other CSI Types that have not been reported in the uplink control information.

In this embodiment, the terminal determines the uplink control information needing to be reported, where the uplink control information includes the uplink control information needing to be reported currently and the uplink control information that needs to be reported previously but has not been reported and is stored by the terminal, so that when the uplink control information fails to be reported completely, the terminal can report partial control information of the uplink control information to the base station according to the priority information of the uplink control information, and store the control information that has not been reported in the uplink control information, thereby appropriately relieving the problem that the terminal fails to report the uplink control information for all transmission points jointly serving the terminal due to some reasons when the terminal needs to report the uplink control information.

As shown in FIG. 2, FIG. 2 is a schematic flow chart of a method for reporting uplink control information according to another embodiment of the present application.

201: A base station determines uplink control information needing to be reported by a terminal, where the uplink control information includes uplink control information needing to be reported currently and uplink control information that needs to be reported previously but has not been reported and is stored by the terminal.

202: When the uplink control information fails to be reported completely, the base station receives, according to priority information of the uplink control information, partial control information reported by the terminal in the uplink control information, and determines control information that has not been reported in the uplink control information and is stored by the terminal.

Optionally, in a possible implementation manner of this embodiment, in 201, the base station specifically may determine, according to reporting-related configuration information of uplink control information and/or reporting requirements of the uplink control information, the uplink control information needing to be reported currently, and may also determine, according to the uplink control information that needs to be reported previously but has not been reported and is stored by the terminal, the uplink control information that needs to be reported previously but has not been reported.

It should be noted that, that the uplink control information fails to be reported completely may be understood as that collision occurs between the uplink control information needing to be reported currently and the uplink control information that needs to be reported previously but has not been reported and is stored by the terminal. For example, collision occurs, on a current sub-frame between the multiple pieces of uplink control information needing to be reported currently and/or the multiple pieces of uplink control information that needs to be reported previously but has not been reported.

The uplink control information, needing to be reported by the terminal, that is determined by the base station may include but is not limited to at least one of CSI, scheduling request information of uplink data and feedback information of downlink data.

It may be understood that, the CSI may include CSI measured by the terminal under various assumption situations.

Optionally, in a possible implementation manner of this embodiment, the CSI may be formed by a rank indicator (Rank Indicator, RI), a precoding matrix indicator (Precoding Matrix Indicator, PMI) and a channel quality indicator (Channel Quality Indicator, CQI).

Optionally, the uplink control information that needs to be reported previously but has not been reported and is stored by the terminal refers to uplink control information that is determined, according to a parameter related with reporting the uplink control information, to be reported on a sub-frame previously but has not been reported due to collision with other uplink control information. In this embodiment, the uplink control information that needs to be reported previously but has not been reported is not dropped (drop), but is stored. When the terminal reports uplink control information next, a priority of the uplink control information to be reported next is compared with a priority of other uplink control information that needs to be reported on a sub-frame corresponding to the next reporting, so as to determine uplink control information to be reported next.

It should be noted that, in 202, the base station specifically may receive partial control information with the highest priority and reported by the terminal in the uplink control information, and determine control information that has not been reported in the uplink control information and is stored by the terminal.

Optionally, in a possible implementation manner of this embodiment, before 202, the base station may further send the priority information of the uplink control information to the terminal.

Specifically, the base station specifically may send the priority information of the uplink control information to the terminal through high-level signaling or a control channel.

For example, the high-level signaling may be a radio resource control (Radio Resource Control, RRC) message. Specifically the priority information of the uplink control information may be carried through an information element (Information Element, IE) of the RRC message. The RRC message may be an RRC message in the prior art, such as an RRC connection reconfiguration (RRC CONNECTION RECONFIGURATION) message, which is not limited in this embodiment. The priority information of the uplink control information is carried by extending an IE of an existing RRC message, or the RRC message may also be different from the existing RRC message in the prior art.

For another example, the high-level signaling may be a media access control (Media Access Control, MAC) control element (Control Element, CE) message, and specifically, the priority information of the uplink control information may also be carried by adding a new MAC CE message.

For another example, the control channel may be a physical downlink control channel (Physical Downlink Control Channel, PDCCH). Specifically, the terminal may receive the priority information of the uplink control information, where the priority information is sent by the base station to the terminal through a PDCCH, or the priority information is sent by the base station through a PDCCH to a group to which the terminal belongs.

Optionally, in a possible implementation manner of this embodiment, the base station may also not need to send the priority information of the uplink control information to the terminal, but instead the terminal may directly obtain, through preconfiguration, the priority information of the uplink control information, such as protocol agreement.

Optionally, in a possible implementation manner of this embodiment, before, when or after the base station determines the control information that has not been reported in the uplink control information and is stored by the terminal, the base station may further send time information to the terminal, where the time information is used for indicating a time length for storing the control information that has not been reported in the uplink control information, so that the terminal drops, according to the time information, the control information that has not been reported in the uplink control information and is stored.

Specifically, the base station specifically may send the time information to the terminal through high-level signaling or a control channel.

For example, the high-level signaling may be a radio resource control (Radio Resource Control, RRC) message. Specifically the time information may be carried through an information element (Information Element, IE) of the RRC message. The RRC message may be an RRC message in the prior art, such as an RRC connection reconfiguration (RRC CONNECTION RECONFIGURATION) message, which is not limited in this embodiment. The time information is carried by extending an IE of an existing RRC message, or the RRC message may also be different from the existing RRC message in the prior art.

For another example, the high-level signaling may be a media access control (Media Access Control, MAC) control element (Control Element, CE) message, and specifically, the time information may also be carried by adding a new MAC CE message.

For another example, the control channel may be a physical downlink control channel (Physical Downlink Control Channel, PDCCH). Specifically, the terminal may receive the time information that is sent by the base station to the terminal through a PDCCH, or may also receive the time information that is sent by the base station through a PDCCH to a group to which the terminal belongs.

Optionally, in a possible implementation manner of this embodiment, the base station may also not need to send the time information to the terminal, but instead the terminal may directly obtain, through preconfiguration, the time information, such as protocol agreement.

Correspondingly, the terminal specifically may drop, according to the time information, the control information that has not been reported in the uplink control information and is stored, when time for storing the control information that has not been reported in the uplink control information exceeds time indicated by the time information.

Specifically, if the uplink control information includes at least one of the CSI, the scheduling request information of uplink data and the feedback information of downlink data, the time information may respectively correspond to information included in the uplink control information.

For example, the time information may respectively correspond to the CSI, the scheduling request information of uplink data and the feedback information of downlink data, that is, the time information may indicate time t1 for storing the CSI, may also indicate time t2 for storing the scheduling request information of uplink data, and may also indicate time t3 for storing the feedback information of downlink data.

Specifically, when the uplink control information includes the CSI, the time information may further correspond to an information combination corresponding to the CSI. For example, the time information may further respectively correspond to a type (CSI Type) corresponding to the CSI. That is, the time information may indicate time t1 for storing CSI Type 1 (that is, a sub-band CQI selected by the terminal); may also indicate time t1' for storing CSI Type 1a (that is, a sub-band CQI and a second PMI); may also indicate time t2 for storing CSI Type 2, CSI Type 2b, and CSI Type 2c (that is, a broadband CQI and a broadband PMI); may also indicate time t2' for storing CSI Type 2a (that is, a broadband PMI); may also indicate time t3 for storing CSI Type 3 (that is, an RI); may also indicate time t4 for storing CSI Type 4 (that is, a broadband CQI); may also indicate time t5 for storing CSI Type 5 (that is, an RI and a broadband PMI); and may also indicate time t6 for storing CSI Type 6 (that is, an RI and precoding type indication (Precoder Type Indication, PTI)); and so on.

Specifically, when the uplink control information includes the CSI, the time information may further correspond to an information type included in the CSI. For example, the time information may also further respectively correspond to an information type corresponding to the CSI. That is, the time information may indicate time t1 for storing an RI; may also indicate time t2 for storing a broadband CQI; may also indicate time t3 for storing a broadband PMI; and may also indicate time t4 for storing a sub-band CQI; and so on.

Optionally, in a possible implementation manner of this embodiment, before the base station determines the control information that has not been reported in the uplink control information and is stored by the terminal, the base station may further send indication information to the terminal, where the indication information is used for instructing the terminal to store the control information that has not been reported in the uplink control information.

Specifically, the base station specifically may send the indication information to the terminal through high-level signaling or a control channel.

For example, the high-level signaling may be a radio resource control (Radio Resource Control, RRC) message. Specifically the indication information may be carried through an information element (Information Element, IE) of the RRC message. The RRC message may be an RRC message in the prior art, such as an RRC connection reconfiguration (RRC CONNECTION RECONFIGURATION) message, which is not limited in this embodiment. The indication information is carried by extending an IE of an existing RRC message, or the RRC message may also be different from the existing RRC message in the prior art.

For another example, the high-level signaling may be a media access control (Media Access Control, MAC) control element (Control Element, CE) message, and specifically, the indication information may also be carried by adding a new MAC CE message.

For another example, the control channel may be a physical downlink control channel (Physical Downlink Control Channel, PDCCH). Specifically, the terminal may receive the indication information that is sent by the base station to the terminal through a PDCCH, or may also receive the indication information that is sent by the base station through a PDCCH to a group to which the terminal belongs.

Optionally, in a possible implementation manner of this embodiment, the base station may also not need to send the indication information to the terminal, but instead the terminal may directly obtain, through preconfiguration, the indication information, such as protocol agreement.

In order to make the method provided by the embodiment of the present application clearer, the following takes it as an example that the uplink control information, needing to be reported by the terminal, that is determined by the base station on a sub-frame on which periodic CSI reporting is performed includes at least one set of CSI. The at least one set of CSI may include CSI needing to be reported on a current sub-frame and/or CSI that needs to be reported on another sub-frame before the current sub-frame but has not been reported and is stored by the terminal.

It should be noted that, the at least one information combination reported by the terminal to the base station in the at least one set of CSI may be an information combination in one set of CSI, or may also be a combination of information in multiple sets of CSI, which is not limited in this embodiment.

It should be noted that, an information combination that a UE needs to report to an eNodeB may be a CSI Type, or may also be a combination of information types included in the CSI, such as one or more CQIs, PMIs, and RIs. The following only takes the CSI Type as an example.

Correspondingly, if the uplink control information, needing to be reported by the terminal, that is determined by the base station includes one set of CSI, in 202, the base station specifically may receive at least one information combination (such as CSI Type 1 or CSI Type 3) in the one set of CSI according to priority information of the information combination in the one set of CSI, such as priority information of a CSI Type, where the at least one information combination is reported by the terminal through a physical uplink control channel (Physical Uplink Control Channel, PUCCH), and determine other information, except the at least one information combination, which is stored by the terminal in the one set of CSI.

Correspondingly, if the uplink control information, needing to be reported by the terminal, that is determined by the base station includes at least two sets of CSI, in 202, the base station specifically may receive at least one information combination (such as CSI Type 1 or CSI Type 3) in the at least two sets of CSI according to priority information of the at least two sets of CSI, such as priority information of a CSI Type, where the at least one information combination is reported by the terminal through a physical uplink control channel (Physical Uplink Control Channel, PUCCH), and determine other information, except the at least one information combination, which has not been reported in the at least one set of CSI and is stored by the terminal.

For example, the priority information of the at least two sets of CSI may be a priority of an information combination of each of the sets of CSI. For another example, when the priorities of information combinations in all the sets of CSI are the same, the priority information of the at least two sets of CSI may be the priority of the at least two sets of CSI.

If the UE is configured with one PUCCH, that is to say, on the sub-frame on which periodic CSI reporting is performed, the UE only can report the uplink control information through the configured PUCCH. The terminal specifically may report a specified quantity (such as one or several) of CSI Types to the eNodeB through the configured PUCCH.

It should be noted that, an information combination that a UE needs to report to an eNodeB may be a combination of information types included in the CSI, such as one or more CQIs, PMIs, and RIs. The following takes the CSI Type as an example.

For example, assuming that the terminal specifically may report one CSI Type to the eNodeB through the configured PUCCH. On a sub-frame where a reporting moment is located, when collision occurs between RIs (that is, RI1 and RI2) included in the two sets of CSI (that is, CSI1 and CSI2) (that is, the RIs included in the two sets of CSI need to be reported on the sub-frame), assuming that a priority of RI1 is higher than a priority of RI2, the UE may report RI1 to the eNodeB on the sub-frame through the configured PUCCH, and store RI2. Content that needs to be reported on a sub-frame where a next reporting moment is located includes: a broadband CQI1 included in CSI1 at this reporting moment, a broadband CQI2 included in CSI2 at this reporting moment and RI2 stored at a previous reporting moment. Assuming that the priority of RI2 is higher than that of CQI1 and CQI2, the UE may report RI2 to the eNodeB on the sub-frame through the configured PUCCH, and store CQI1 and CQI2. By analogy, it can be implemented that on the sub-frame on which periodic CSI reporting is performed, the UE reports one CSI Type in CSI where collision occurs.

Specifically, when a PUCCH (that is, PUCCH1) on which Type3 or Type5 or Type6 of one set of CSI is fed back collides with a PUCCH (that is, PUCCH2) on which Type1 or Type1a or Type2 or Type2a or Type2b or Type2c or Type 4 of the same set of CSI is fed back, content fed back on the latter (that is, PUCCH2) is stored because a priority of the content is lower, and therefore, only content of the former (that is, PUCCH1) is fed back. Content fed back on one PUCCH is one CSI Type.

When the UE is configured with more than one set of CSI, the UE only feeds back one set of CSI in one sub-frame. Then, in one sub-frame, when a PUCCH (that is, PUCCH3) on which Type3 or Type5 or Type6 or Type2a of one set of CSI is fed back collides with a PUCCH (that is, PUCCH4) on which Type1 or Type1a or Type2 or Type2b or Type2c or Type4 of another set of CSI is fed back, content fed back on the latter (that is, PUCCH4) is stored because a priority of the content is lower, and therefore, only content of the former (that is, PUCCH3) is fed back. In one sub-frame, when a PUCCH (that is, PUCCH5) on which Type2 or Type2b or Type2c or Type4 of one set of CSI is fed back collides with a PUCCH (that is, PUCCH6) on which Type1 or Type1a of another set of CSI is fed back, content fed back on the latter (that is, PUCCH6) is stored because a priority of the content is lower, and therefore, only content of the former (that is, PUCCH5) is fed back.

It should be noted that, a priority of content, namely, a CSI Type, fed back on a PUCCH may be determined according to the Type, and priorities are different when Types are different. If the Types are the same, the priority of the content fed back on the PUCCH may further be determined according to an index number of the CSI to which the Types belong, and the priorities are different when the index numbers of the CSI are different. If the Types are the same, the CSI to which the Types belong is the same, and the priority of the content fed back on the PUCCH may further be determined according to an index number of a sub-frame or bandwidth part (Bandwidth Part, BP) corresponding to the Type, and the priorities are different when the index numbers of the sub-frames or BPs are different.

If the UE is configured with multiple PUCCHs, that is, on the sub-frame on which periodic CSI reporting is performed, the UE can only report a specified quantity (such as one or several) of CSI Types to the eNodeB through each PUCCH of the configured multiple PUCCHs.

It should be noted that, if the UE is configured with multiple PUCCHs, for each PUCCH of the multiple PUCCHs, specifically, the UE may report a specified quantity (such as one or several) of CSI Types to the eNodeB through each PUCCH according to priority information of the CSI independently; or, for multiple PUCCHs, the UE may report a specified quantity (such as one or several) of CSI Types to the eNodeB through each PUCCH according to priority information of the CSI jointly.

It should be noted that, on the sub-frame on which periodic CSI reporting is performed, the terminal may also adopt similar methods to implement that, on the sub-frame on which periodic CSI reporting is performed, the UE reports, through a physical uplink shared channel (Physical Uplink Shared Channel, PUSCH) or another uplink channel, one or more CSI Types in the CSI where collision occurs, and stores a CSI Type that cannot be reported.

It should be noted that, on a sub-frame on which aperiodic CSI reporting is performed, the terminal may also adopt similar methods to implement that, on the sub-frame on which aperiodic CSI reporting is performed, the UE reports, through a PUSCH or another uplink channel, one or more CSI Types in the CSI where collision occurs, and stores a CSI Type that cannot be reported.

It should be noted that, on a sub-frame on which periodic CSI reporting and aperiodic CSI reporting are performed, for periodic CSI reporting and aperiodic CSI reporting, specifically, the UE may report a specified quantity (such as one or several) of CSI Types to the eNodeB through each PUCCH or each PUSCH according to priority information of the CSI independently; or, for periodic CSI reporting and aperiodic CSI reporting, the UE may report a specified quantity (such as one or several) of CSI Types to the eNodeB through each PUCCH or each PUSCH according to priority information of the CSI jointly, and store a CSI Type that cannot be reported.

It should be noted that, the terminal specifically may report, to the base station, one or more CSI Types with the highest priority in the CSI where collision occurs, and store other CSI Types that have not been reported in the uplink control information.

In this embodiment, the base station determines the uplink control information needing to be reported by the terminal, where the uplink control information includes the uplink control information needing to be reported currently and the uplink control information that needs to be reported previously but has not been reported and is stored by the terminal, so that when the uplink control information fails to be reported completely, the base station can receive, according to the priority information of the uplink control information, the partial control information reported by the terminal in the uplink control information, and determine the control information that has not been reported in the uplink control information and is stored by the terminal, thereby appropriately relieving the problem that the terminal fails to report the uplink control information for all transmission points jointly serving the terminal due to some reasons when the terminal needs to report the uplink control information.

It should be noted that, to simplify the description, the foregoing method embodiments are described as a series of action combination. However, persons skilled in the art should learn that the present application is not limited to any described action sequence, as some steps can adopt other sequences or can be performed simultaneously according to the present application. Secondarily, persons skilled in the art should also learn that the embodiments described in the specification all belong to exemplary embodiments and the involved actions and modules are not necessary for the present application.

In the foregoing embodiments, description of each embodiment has its emphasis, and for the part not described in detail in an embodiment, reference may be made to related description in other embodiments.

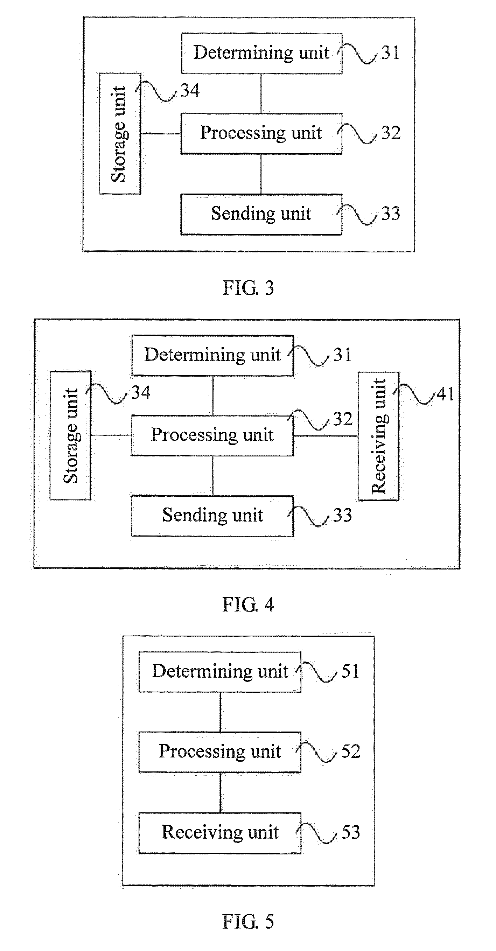

As shown in FIG. 3, FIG. 3 is a schematic structural diagram of a terminal according to another embodiment of the present application. The terminal in this embodiment may include a determining unit 31, a processing unit 32, a sending unit 33 and a storage unit 34. The determining unit 31 is configured to determine uplink control information needing to be reported, where the uplink control information includes uplink control information needing to be reported currently and uplink control information that needs to be reported previously but has not been reported and is stored by the terminal; the processing unit 32 is configured to: when the uplink control information determined by the determining unit 31 fails to be reported completely, determine, according to priority information of the uplink control information, partial control information reported in the uplink control information, and determine control information that has not been reported in the uplink control information; the sending unit 33 is configured to report the partial control information determined by the processing unit 32 in the uplink control information to a base station; and the storage unit 34 is configured to store the control information that has not been reported in the uplink control information and is determined by the processing unit 32.

Optionally, in a possible implementation manner of this embodiment, the determining unit 31 specifically may determine, according to reporting-related configuration information of uplink control information and/or reporting requirements of the uplink control information, the uplink control information needing to be reported currently, and may also determine, according to the uplink control information that needs to be reported previously but has not been reported and is stored by the storage unit 34, the uplink control information that needs to be reported previously but has not been reported.

It should be noted that, that the uplink control information fails to be reported completely may be understood as that collision occurs between the uplink control information needing to be reported currently and the uplink control information that needs to be reported previously but has not been reported and is stored by the terminal. For example, collision occurs, on a current sub-frame between the multiple pieces of uplink control information needing to be reported currently and/or the multiple pieces of uplink control information that needs to be reported previously but has not been reported.

The uplink control information that needs to be reported and is determined by the determining unit 31 may include but is not limited to at least one of CSI, scheduling request information of uplink data and feedback information of downlink data.

It may be understood that, the CSI may include CSI measured by the terminal under various assumption situations.

Optionally, in a possible implementation manner of this embodiment, the CSI may be formed by a rank indicator (Rank Indicator, RI), a precoding matrix indicator (Precoding Matrix Indicator, PMI) and a channel quality indicator (Channel Quality Indicator, CQI).

Optionally, the uplink control information that needs to be reported previously but has not been reported and is stored by the terminal refers to uplink control information that is determined, according to a parameter related with reporting the uplink control information, to be reported on a sub-frame previously but has not been reported due to collision with other uplink control information. In this embodiment, the uplink control information that needs to be reported previously but has not been reported is not dropped (drop), but is stored. When the terminal reports uplink control information next, a priority of the uplink control information to be reported next is compared with a priority of other uplink control information that needs to be reported on a sub-frame corresponding to the next reporting, so as to determine uplink control information to be reported next.

It should be noted that, the processing unit 32 specifically may determine partial control information with the highest priority as the partial control information reported in the uplink control information, and determine control information with the lowest priority as the control information that has not been reported in the uplink control information.

Optionally, in a possible implementation manner of this embodiment, as shown in FIG. 4, the terminal provided by this embodiment may further include a receiving unit 41, configured to obtain priority information of the uplink control information.

Specifically, the receiving unit 41 specifically may receive the priority information of the uplink control information, where the priority information is sent by the base station. Specifically, the receiving unit 41 specifically may receive the priority information of the uplink control information, where the priority information is sent by the base station through high-level signaling or a control channel.

Optionally, in a possible implementation manner of this embodiment, the receiving unit 41 may further obtain time information, and transmit the time information to the processing unit 32, where the time information is used for indicating a time length for storing the control information that has not been reported in the uplink control information.

Specifically, the receiving unit 41 specifically may receive the time information sent by the base station. Specifically, the receiving unit 41 specifically may receive the time information that is sent by the base station through high-level signaling or a control channel.

Correspondingly, the processing unit 32 may further instruct, according to the time information, the storage unit 34 to drop the control information that has not been reported in the uplink control information and is stored, when time for the storage unit 34 to store the control information that has not been reported in the uplink control information exceeds time indicated by the time information.

Specifically, if the uplink control information includes at least one of the CSI, the scheduling request information of uplink data and the feedback information of downlink data, the time information may respectively correspond to information included in the uplink control information.

For example, the time information may respectively correspond to the CSI, the scheduling request information of uplink data and the feedback information of downlink data, that is, the time information may indicate time t1 for storing the CSI, may also indicate time t2 for storing the scheduling request information of uplink data, and may also indicate time t3 for storing the feedback information of downlink data.

Specifically, when the uplink control information includes the CSI, the time information may further correspond to an information combination corresponding to the CSI. For example, the time information may further respectively correspond to a type (CSI Type) corresponding to the CSI. That is, the time information may indicate time t1 for storing CSI Type 1 (that is, a sub-band CQI selected by the terminal); may also indicate time t1' for storing CSI Type 1a (that is, a sub-band CQI and a second PMI); may also indicate time t2 for storing CSI Type 2, CSI Type 2b, and CSI Type 2c (that is, a broadband CQI and a broadband PMI); may also indicate time t2' for storing CSI Type 2a (that is, a broadband PMI); may also indicate time t3 for storing CSI Type 3 (that is, an RI); may also indicate time t4 for storing CSI Type 4 (that is, a broadband CQI); may also indicate time t5 for storing CSI Type 5 (that is, an RI and a broadband PMI); and may also indicate time t6 for storing CSI Type 6 (that is, an RI and precoding type indication (Precoder Type Indication, PTI)); and so on.

Specifically, when the uplink control information includes the CSI, the time information may further correspond to an information type included in the CSI. For example, the time information may also further respectively correspond to a type included in the CSI. That is, the time information may indicate time t1 for storing an RI; may also indicate time t2 for storing a broadband CQI; may also indicate time t3 for storing a broadband PMI; and may also indicate time t4 for storing a sub-band CQI; and so on.

Optionally, in a possible implementation manner of this embodiment, the receiving unit 41 may further obtain indication information, where the indication information is used for instructing to store the control information that has not been reported in the uplink control information and is determined by the processing unit 32. Correspondingly, the processing unit 32 specifically may store, according to the indication information, the control information that has not been reported in the uplink control information and is determined by the processing unit 32.

Specifically, the receiving unit 41 specifically may receive the indication information sent by the base station. Specifically, the receiving unit 41 specifically may receive the indication information that is sent by the base station through high-level signaling or a control channel.

In order to make the method provided by the embodiment of the present application clearer, the following takes it as an example that the uplink control information that needs to be reported and is determined by the determining unit 31 on a sub-frame on which periodic CSI reporting is performed includes at least one set of CSI. The uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal. At this time, the CSI needing to be reported on the current sub-frame is at least one information combination in the at least one set of CSI, and the CSI that needs to be reported on another sub-frame before the current sub-frame but has not been reported is at least one information combination in the at least one set of CSI.

It should be noted that, the at least one information combination reported by the terminal to the base station in the at least one set of CSI may be an information combination in one set of CSI, or may also be a combination of information in multiple sets of CSI, which is not limited in this embodiment.

Correspondingly, the processing unit 32 is specifically configured to determine, according to priority information of the at least one set of CSI, at least one information combination reported in the at least one set of CSI, and determine other information, except the at least one information combination, which has not been reported in the at least one set of CSI; the sending unit 33 is specifically configured to report the at least one information combination determined by the processing unit 32 in the at least one set of CSI to the base station through a PUCCH; and the storage unit 34 is specifically configured to store the other information, except the at least one information combination, which has not been reported in the at least one set of CSI and is determined by the processing unit 32.

In this embodiment, the terminal determines, by using the determining unit, the uplink control information needing to be reported, where the uplink control information includes the uplink control information needing to be reported currently and the uplink control information that needs to be reported previously but has not been reported and is stored by the terminal; when the uplink control information determined by the determining unit fails to be reported completely, the processing unit determines, according to the priority information of the uplink control information, the partial control information reported in the uplink control information, and determines the control information that has not been reported in the uplink control information, so that the sending unit can report the partial control information determined by the processing unit in the uplink control information to the base station, and the storage unit can store the control information that has not been reported in the uplink control information and is determined by the processing unit, thereby appropriately relieving the problem that the terminal fails to report the uplink control information for all transmission points jointly serving the terminal due to some reasons when the terminal needs to report the uplink control information.

FIG. 5 is a schematic structural diagram of a base station according to another embodiment of the present application. As shown in FIG. 5, the base station in this embodiment may include a determining unit 51, a processing unit 52 and a receiving unit 53. The determining unit 51 is configured to determine uplink control information needing to be reported by a terminal, where the uplink control information includes uplink control information needing to be reported currently and uplink control information that needs to be reported previously but has not been reported and is stored by the terminal; the processing unit 52 is configured to: when the uplink control information determined by the determining unit 51 fails to be reported completely, determine, according to priority information of the uplink control information, partial control information reported in the uplink control information, and determine control information that has not been reported in the uplink control information and is stored by the terminal; and the receiving unit 53 is configured to receive, according to the partial control information determined by the processing unit 52 in the uplink control information, the partial control information reported by the terminal in the uplink control information.

Optionally, in a possible implementation manner of this embodiment, the determining unit 51 specifically may determine, according to reporting-related configuration information of uplink control information and/or reporting requirements of the uplink control information, the uplink control information needing to be reported currently, and may also determine, according to the uplink control information that needs to be reported previously but has not been reported and is stored by the terminal, the uplink control information that needs to be reported previously but has not been reported.

It should be noted that, that the uplink control information fails to be reported completely may be understood as that collision occurs between the uplink control information needing to be reported currently and the uplink control information that needs to be reported previously but has not been reported and is stored by the terminal. For example, collision occurs, on a current sub-frame between the multiple pieces of uplink control information needing to be reported currently and/or the multiple pieces of uplink control information that needs to be reported previously but has not been reported.

The uplink control information that needs to be reported by the terminal and is determined by the determining unit 51 may include but is not limited to at least one of CSI, scheduling request information of uplink data and feedback information of downlink data.

It may be understood that, the CSI may include CSI measured by the terminal under various assumption situations.

Optionally, in a possible implementation manner of this embodiment, the CSI may be formed by a rank indicator (Rank Indicator, RI), a precoding matrix indicator (Precoding Matrix Indicator, PMI) and a channel quality indicator (Channel Quality Indicator, CQI).

Optionally, the uplink control information that needs to be reported previously but has not been reported and is stored by the terminal refers to uplink control information that is determined, according to a parameter related with reporting the uplink control information, to be reported on a sub-frame previously but has not been reported due to collision with other uplink control information. In this embodiment, the uplink control information that needs to be reported previously but has not been reported is not dropped (drop), but is stored. When the terminal reports uplink control information next, a priority of the uplink control information to be reported next is compared with a priority of other uplink control information that needs to be reported on a sub-frame corresponding to the next reporting, so as to determine uplink control information to be reported next.

It should be noted that, the processing unit 52 specifically may determine partial control information with the highest priority as the partial control information reported in the uplink control information, and determine control information with the lowest priority as the control information that has not been reported in the uplink control information.

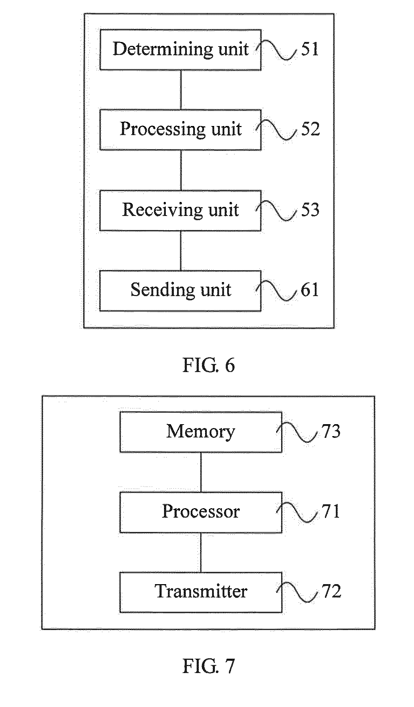

Optionally, in a possible implementation manner of this embodiment, as shown in FIG. 6, the base station provided by this embodiment may further include a sending unit 61, configured to send priority information of the uplink control information to the terminal.

Specifically, the sending unit 61 specifically may send the priority information of the uplink control information to the terminal through high-level signaling or a control channel.

Optionally, in a possible implementation manner of this embodiment, the sending unit 61 may further send time information to the terminal, where the time information is used for indicating a time length for storing the control information that has not been reported in the uplink control information, so that the terminal drops, according to the time information, the control information that has not been reported in the uplink control information and is stored.

Specifically, the sending unit 61 specifically may send the time information to the terminal through high-level signaling or a control channel.

Correspondingly, the terminal specifically may drop, according to the time information, the control information that has not been reported in the uplink control information and is stored, when time for storing the control information that has not been reported in the uplink control information exceeds time indicated by the time information.

Specifically, if the uplink control information includes at least one of the CSI, the scheduling request information of uplink data and the feedback information of downlink data, the time information may respectively correspond to information included in the uplink control information.

For example, the time information may respectively correspond to the CSI, the scheduling request information of uplink data and the feedback information of downlink data, that is, the time information may indicate time t1 for storing the CSI, may also indicate time t2 for storing the scheduling request information of uplink data, and may also indicate time t3 for storing the feedback information of downlink data.

Specifically, when the uplink control information includes the CSI, the time information may further correspond to an information combination corresponding to the CSI. For example, the time information may further respectively correspond to a type (CSI Type) corresponding to the CSI. That is, the time information may indicate time t1 for storing CSI Type 1 (that is, a sub-band CQI selected by the terminal); may also indicate time t1' for storing CSI Type 1a (that is, a sub-band CQI and a second PMI); may also indicate time t2 for storing CSI Type 2, CSI Type 2b, and CSI Type 2c (that is, a broadband CQI and a broadband PMI); may also indicate time t2' for storing CSI Type 2a

(that is, a broadband PMI); may also indicate time t3 for storing CSI Type 3 (that is, an RI); may also indicate time t4 for storing CSI Type 4 (that is, a broadband CQI); may also indicate time t5 for storing CSI Type 5 (that is, an RI and a broadband PMI); and may also indicate time t6 for storing CSI Type 6 (that is, an RI and precoding type indication (Precoder Type Indication, PTI)); and so on.

Specifically, when the uplink control information includes the CSI, the time information may further correspond to an information type included in the CSI. For example, the time information may also further respectively correspond to an information type corresponding to the CSI. That is, the time information may indicate time t1 for storing an RI; may also indicate time t2 for storing a broadband CQI; may also indicate time t3 for storing a broadband PMI; and may also indicate time t4 for storing a sub-band CQI; and so on.

Optionally, in a possible implementation manner of this embodiment, the sending unit 61 may further send indication information to the terminal, where the indication information is used for instructing the terminal to store the control information that has not been reported in the uplink control information.

Specifically, the sending unit 61 specifically may send the indication information to the terminal through high-level signaling or a control channel.

In order to make the method provided by the embodiment of the present application clearer, the following takes it as an example that the uplink control information that needs to be reported by the terminal and is determined by the determining unit 51 on a sub-frame on which periodic CSI reporting is performed includes at least one set of CSI. The uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal.

It should be noted that, the at least one information combination reported by the terminal to the base station in the at least one set of CSI may be an information combination in one set of CSI, or may also be a combination of information in multiple sets of CSI, which is not limited in this embodiment.

Correspondingly, the processing unit 52 specifically may be configured to determine, according to priority information of the at least one set of CSI, at least one information combination reported in the at least one set of CSI, and determine other information, except the at least one information combination, which has not been reported in the at least one set of CSI; the receiving unit 53 is specifically configured to receive, according to the at least one information combination reported in the at least one set of CSI and determined by the processing unit 52, at least one information combination that is reported by the terminal through a PUCCH in the at least one set of CSI; and the determining unit 51 is specifically configured to determine, according to the other information, except the at least one information combination, which has not been reported in the at least one set of CSI and is determined by the processing unit 52, other information, except the at least one information combination, which has not been reported in the at least one set of CSI and is stored by the terminal.

In this embodiment, the base station determines, by using the determining unit, the uplink control information needing to be reported by the terminal, where the uplink control information includes the uplink control information needing to be reported currently and the uplink control information that needs to be reported previously but has not been reported and is stored by the terminal; when the uplink control information determined by the determining unit fails to be reported completely, the processing unit determines, according to the priority information of the uplink control information, the partial control information reported in the uplink control information, and determines the control information that has not been reported in the uplink control information and is stored by the terminal, so that the receiving unit can receive, according to the partial control information reported in the uplink control information and determined by the processing unit, the partial control information reported by the terminal in the uplink control information, thereby appropriately relieving the problem that the terminal fails to report the uplink control information for all transmission points jointly serving the terminal due to some reasons when the terminal needs to report the uplink control information.

As shown in FIG. 7, FIG. 7 is a schematic structural diagram of a terminal according to another embodiment of the present application. The terminal in this embodiment may include a processor 71, a transmitter 72 and a memory 73. The processor 71 is configured to determine uplink control information needing to be reported, where the uplink control information includes uplink control information needing to be reported currently and uplink control information that needs to be reported previously but has not been reported and is stored by the terminal; and when the uplink control information fails to be reported completely, determine, according to priority information of the uplink control information, partial control information reported in the uplink control information, and determine control information that has not been reported in the uplink control information; the transmitter 72 is configured to report the partial control information determined by the processor 71 in the uplink control information to a base station; and the memory 73 is configured to store the control information that has not been reported in the uplink control information and is determined by the processor 71.

Optionally, in a possible implementation manner of this embodiment, the processor 71 specifically may determine, according to reporting-related configuration information of uplink control information and/or reporting requirements of the uplink control information, the uplink control information needing to be reported currently, and may also determine, according to the uplink control information that needs to be reported previously but has not been reported and is stored by the memory 73, the uplink control information that needs to be reported previously but has not been reported.

It should be noted that, that the uplink control information fails to be reported completely may be understood as that collision occurs between the uplink control information needing to be reported currently and the uplink control information that needs to be reported previously but has not been reported and is stored by the terminal. For example, collision occurs, on a current sub-frame between the multiple pieces of uplink control information needing to be reported currently and/or the multiple pieces of uplink control information that needs to be reported previously but has not been reported.

The uplink control information that needs to be reported and is determined by the processor 71 may include but is not limited to at least one of CSI, scheduling request information of uplink data and feedback information of downlink data.

It may be understood that, the CSI may include CSI measured by the terminal under various assumption situations.

Optionally, in a possible implementation manner of this embodiment, the CSI may be formed by a rank indicator (Rank Indicator, RI), a precoding matrix indicator (Precoding Matrix Indicator, PMI) and a channel quality indicator (Channel Quality Indicator, CQI).

Optionally, the uplink control information that needs to be reported previously but has not been reported and is stored by the terminal refers to uplink control information that is determined, according to a parameter related with reporting the uplink control information, to be reported on a sub-frame previously but has not been reported due to collision with other uplink control information. In this embodiment, the uplink control information that needs to be reported previously but has not been reported is not dropped (drop), but is stored. When the terminal reports uplink control information next, a priority of the uplink control information to be reported next is compared with a priority of other uplink control information that needs to be reported on a sub-frame corresponding to the next reporting, so as to determine uplink control information to be reported next.

It should be noted that, the processor 71 specifically may determine partial control information with the highest priority as the partial control information reported in the uplink control information, and determine control information with the lowest priority as the control information that has not been reported in the uplink control information.

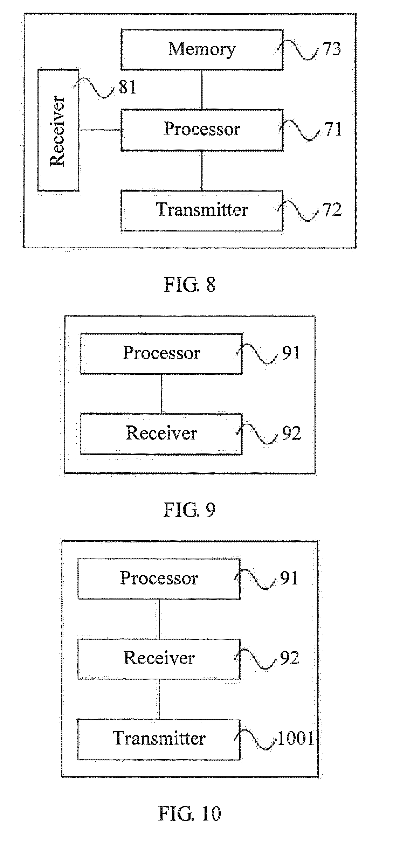

Optionally, in a possible implementation manner of this embodiment, as shown in FIG. 8, the terminal provided by this embodiment may further include a receiver 81, configured to obtain priority information of the uplink control information.

Specifically, the receiver 81 specifically may receive the priority information of the uplink control information, where the priority information is sent by the base station. Specifically, the receiver 81 specifically may receive the priority information of the uplink control information, where the priority information is sent by the base station through high-level signaling or a control channel.

Optionally, in a possible implementation manner of this embodiment, the receiver 81 may further obtain time information, and transmit the time information to the processor 71, where the time information is used for indicating a time length for storing the control information that has not been reported in the uplink control information.

Specifically, the receiver 81 specifically may receive the time information sent by the base station. Specifically, the receiver 81 specifically may receive the time information that is sent by the base station through high-level signaling or a control channel.

Correspondingly, the processor 71 may further instruct, according to the time information, the memory 73 to drop the control information that has not been reported in the uplink control information and is stored, when time for the memory 73 to store the control information that has not been reported in the uplink control information exceeds time indicated by the time information.

Specifically, if the uplink control information includes at least one of the CSI, the scheduling request information of uplink data and the feedback information of downlink data, the time information may respectively correspond to information included in the uplink control information.

For example, the time information may respectively correspond to the CSI, the scheduling request information of uplink data and the feedback information of downlink data, that is, the time information may indicate time t1 for storing the CSI, may also indicate time t2 for storing the scheduling request information of uplink data, and may also indicate time t3 for storing the feedback information of downlink data.

Specifically, when the uplink control information includes the CSI, the time information may further correspond to an information combination corresponding to the CSI. For example, the time information may further respectively correspond to a type (CSI Type) corresponding to the CSI. That is, the time information may indicate time t1 for storing CSI Type 1 (that is, a sub-band CQI selected by the terminal); may also indicate time t1' for storing CSI Type 1a (that is, a sub-band CQI and a second PMI); may also indicate time t2 for storing CSI Type 2, CSI Type 2b, and CSI Type 2c (that is, a broadband CQI and a broadband PMI); may also indicate time t2' for storing CSI Type 2a (that is, a broadband PMI); may also indicate time t3 for storing CSI Type 3 (that is, an RI); may also indicate time t4 for storing CSI Type 4 (that is, a broadband CQI); may also indicate time t5 for storing CSI Type 5 (that is, an RI and a broadband PMI); and may also indicate time t6 for storing CSI Type 6 (that is, an RI and precoding type indication (Precoder Type Indication, PTI)); and so on.

Specifically, when the uplink control information includes the CSI, the time information may further correspond to an information type included in the CSI. For example, the time information may also further respectively correspond to a type included in the CSI. That is, the time information may indicate time t1 for storing an RI; may also indicate time t2 for storing a broadband CQI; may also indicate time t3 for storing a broadband PMI; and may also indicate time t4 for storing a sub-band CQI; and so on.

Optionally, in a possible implementation manner of this embodiment, the receiver 81 may further obtain indication information, where the indication information is used for instructing to store the control information that has not been reported in the uplink control information and is determined by the processor 71. Correspondingly, the processor 71 specifically may store, according to the indication information, the control information that has not been reported in the uplink control information and is determined by the processor 71.

Specifically, the receiver 81 specifically may receive the indication information sent by the base station. Specifically, the receiver 81 specifically may receive the indication information that is sent by the base station through high-level signaling or a control channel.

In order to make the method provided by the embodiment of the present application clearer, the following takes it as an example that the uplink control information that needs to be reported and is determined by the processor 71 on a sub-frame on which periodic CSI reporting is performed includes at least one set of CSI. The uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal. At this time, the CSI needing to be reported on the current sub-frame is at least one information combination in the at least one set of CSI, and the CSI that needs to be reported on another sub-frame before the current sub-frame but has not been reported is at least one information combination in the at least one set of CSI.

It should be noted that, the at least one information combination reported by the terminal to the base station in the at least one set of CSI may be an information combination in one set of CSI, or may also be a combination of information in multiple sets of CSI, which is not limited in this embodiment.

Correspondingly, the processor 71 is specifically configured to determine, according to priority information of the at least one set of CSI, at least one information combination reported in the at least one set of CSI, and determine other information, except the at least one information combination, which has not been reported in the at least one set of CSI; the transmitter 72 is specifically configured to report the at least one information combination determined by the processor 71 in the at least one set of CSI to the base station through a PUCCH; and the memory 73 is specifically configured to store the other information, except the at least one information combination, which has not been reported in the at least one set of CSI and is determined by the processor 71.

In this embodiment, the terminal determines, by using the processor, the uplink control information needing to be reported, where the uplink control information includes uplink control information needing to be reported currently and uplink control information that needs to be reported previously but has not been reported and is stored by the terminal; when the uplink control information determined by the processor fails to be reported completely, the processor determines, according to the priority information of the uplink control information, the partial control information reported in the uplink control information, and determines the control information that has not been reported in the uplink control information, so that the transmitter can report the partial control information determined by the processor in the uplink control information to the base station, and the memory can store the control information that has not been reported in the uplink control information and is determined by the processor, thereby appropriately relieving the problem that the terminal fails to report the uplink control information for all transmission points jointly serving the terminal due to some reasons when the terminal needs to report the uplink control information.

FIG. 9 is a schematic structural diagram of a base station according to another embodiment of the present application. As shown in FIG. 9, the base station in this embodiment may include a processor 91, and a receiver 92. The processor 91 is configured to determine uplink control information needing to be reported by a terminal, where the uplink control information includes uplink control information needing to be reported currently and uplink control information that needs to be reported previously but has not been reported and is stored by the terminal; and when the uplink control information fails to be reported completely, determine, according to priority information of the uplink control information, partial control information reported in the uplink control information, and determine control information that has not been reported in the uplink control information and is stored by the terminal; and the receiver 92 is configured to receive, according to the partial control information determined by the processor 91 in the uplink control information, the partial control information reported by the terminal in the uplink control information.

Optionally, in a possible implementation manner of this embodiment, the processor 91 specifically may determine, according to reporting-related configuration information of uplink control information and/or reporting requirements of the uplink control information, the uplink control information needing to be reported currently, and may also determine, according to the uplink control information that needs to be reported previously but has not been reported and is stored by the terminal, the uplink control information that needs to be reported previously but has not been reported.

It should be noted that, that the uplink control information fails to be reported completely may be understood as that collision occurs between the uplink control information needing to be reported currently and the uplink control information that needs to be reported previously but has not been reported and is stored by the terminal. For example, collision occurs, on a current sub-frame between the multiple pieces of uplink control information needing to be reported currently and/or the multiple pieces of uplink control information that needs to be reported previously but has not been reported.

The uplink control information that needs to be reported by the terminal and is determined by the processor 91 may include but is not limited to at least one of CSI, scheduling request information of uplink data and feedback information of downlink data.

It may be understood that, the CSI may include CSI measured by the terminal under various assumption situations.

Optionally, in a possible implementation manner of this embodiment, the CSI may be formed by a rank indicator (Rank Indicator, RI), a precoding matrix indicator (Precoding Matrix Indicator, PMI) and a channel quality indicator (Channel Quality Indicator, CQI).

Optionally, the uplink control information that needs to be reported previously but has not been reported and is stored by the terminal refers to uplink control information that is determined, according to a parameter related with reporting the uplink control information, to be reported on a sub-frame previously but has not been reported due to collision with other uplink control information. In this embodiment, the uplink control information that needs to be reported previously but has not been reported is not dropped (drop), but is stored. When the terminal reports uplink control information next, a priority of the uplink control information to be reported next is compared with a priority of other uplink control information that needs to be reported on a sub-frame corresponding to the next reporting, so as to determine uplink control information to be reported next.

It should be noted that, the processor 91 specifically may determine partial control information with the highest priority as the partial control information reported in the uplink control information, and determine control information with the lowest priority as the control information that has not been reported in the uplink control information.

Optionally, in a possible implementation manner of this embodiment, as shown in FIG. 10, the base station provided by this embodiment may further include a transmitter 1001, configured to send the priority information of the uplink control information to the terminal.

Specifically, the transmitter 1001 specifically may send the priority information of the uplink control information to the terminal through high-level signaling or a control channel.

Optionally, in a possible implementation manner of this embodiment, the transmitter 1001 may further send time information to the terminal, where the time information is used for indicating a time length for storing the control information that has not been reported in the uplink control information, so that the terminal drops, according to the time information, the control information that has not been reported in the uplink control information and is stored.

Specifically, the transmitter 1001 specifically may send the time information to the terminal through high-level signaling or a control channel.

Correspondingly, the terminal specifically may drop, according to the time information, the control information that has not been reported in the uplink control information and is stored, when time for storing the control information that has not been reported in the uplink control information exceeds time indicated by the time information.

Specifically, if the uplink control information includes at least one of the CSI, the scheduling request information of uplink data and the feedback information of downlink data, the time information may respectively correspond to information included in the uplink control information.

For example, the time information may respectively correspond to the CSI, the scheduling request information of uplink data and the feedback information of downlink data, that is, the time information may indicate time t1 for storing the CSI, may also indicate time t2 for storing the scheduling request information of uplink data, and may also indicate time t3 for storing the feedback information of downlink data.

Specifically, when the uplink control information includes the CSI, the time information may further correspond to an information combination corresponding to the CSI. For example, the time information may further respectively correspond to a type (CSI Type) corresponding to the CSI. That is, the time information may indicate time t1 for storing CSI Type 1 (that is, a sub-band CQI selected by the terminal); may also indicate time t1' for storing CSI Type 1a (that is, a sub-band CQI and a second PMI); may also indicate time t2 for storing CSI Type 2, CSI Type 2b, and CSI Type 2c (that is, a broadband CQI and a broadband PMI); may also indicate time t2' for storing CSI Type 2a (that is, a broadband PMI); may also indicate time t3 for storing CSI Type 3 (that is, an RI); may also indicate time t4 for storing CSI Type 4 (that is, a broadband CQI); may also indicate time t5 for storing CSI Type 5 (that is, an RI and a broadband PMI); and may also indicate time t6 for storing CSI Type 6 (that is, an RI and precoding type indication (Precoder Type Indication, PTI)); and so on.

Specifically, when the uplink control information includes the CSI, the time information may further correspond to an information type included in the CSI. For example, the time information may also further respectively correspond to an information type corresponding to the CSI. That is, the time information may indicate time t1 for storing an RI; may also indicate time t2 for storing a broadband CQI; may also indicate time t3 for storing a broadband PMI; and may also indicate time t4 for storing a sub-band CQI; and so on.

Optionally, in a possible implementation manner of this embodiment, the transmitter 1001 may further send indication information to the terminal, where the indication information is used for instructing the terminal to store the control information that has not been reported in the uplink control information.

Specifically, the transmitter 1001 specifically may send the indication information to the terminal through high-level signaling or a control channel.

In order to make the method provided by the embodiment of the present application clearer, the following takes it as an example that the uplink control information that needs to be reported by the terminal and is determined by the processor 91 on a sub-frame on which periodic CSI reporting is performed includes at least one set of CSI. The uplink control information needing to be reported currently includes CSI needing to be reported on a current sub-frame, and the uplink control information that needs to be reported previously but has not been reported and is stored by the terminal includes CSI that needs to be reported on another sub-frame before the current sub-frame but has not been reported and is stored by the terminal.

It should be noted that, the at least one information combination reported by the terminal to the base station in the at least one set of CSI may be an information combination in one set of CSI, or may also be a combination of information in multiple sets of CSI, whi h is not limited in this embodiment.

Correspondingly, the processor 91 specifically may be configured to determine, according to priority information of the at least one set of CSI, at least one information combination reported in the at least one set of CSI, and determine other information, except the at least one information combination, which has not been reported in the at least one set of CSI; the receiver 92 is specifically configured to receive, according to the at least one information combination reported in the at least one set of CSI and determined by the processor 91, the at least one information combination that is reported by the terminal through a PUCCH in the at least one set of CSI; and the processor 91 is specifically configured to determine, according to the other information, except the at least one information combination, which has not been reported in the at least one set of CSI and is determined by the processor 91, other information, except the at least one information combination, which has not been reported in the at least one set of CSI and is stored by the terminal.

In this embodiment, the base station determines, by using the processor, the uplink control information needing to be reported by the terminal, where the uplink control information includes uplink control information needing to be reported currently and uplink control information that needs to be reported previously but has not been reported and is stored by the terminal; when the uplink control information determined by the processor fails to be reported completely, the processor determines, according to the priority information of the uplink control information, the partial control information reported in the uplink control information, and determines the control information that has not been reported in the uplink control information and is stored by the terminal, so that the receiver can receive, according to the partial control information reported in the uplink control information and determined by the processor, the partial control information reported by the terminal in the uplink control information, thereby appropriately relieving the problem that the terminal fails to report the uplink control information for all transmission points jointly serving the terminal due to some reasons when the terminal needs to report the uplink control information.

It may be clearly understood by persons skilled in the art that, for the purpose of convenient and brief description, for the detailed working processes of the foregoing system, apparatus, and unit, reference may be made to the corresponding processes in the foregoing method embodiments, and the details will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented through hardware, or may also be implemented in a form of hardware plus a software functional module.

The integrated unit implemented in a form of software functional unit may be stored in a computer readable storage medium. The foregoing software functional unit is stored in a storage medium, and includes several instructions for instructing a computer device (which may be a personal computer, a server, or a network equipment) to perform a part of the steps of the methods described in the embodiments of the present application. The foregoing storage medium includes: any medium that can store program codes, such as a USB flash disk, a removable hard disk, a read-only memory (Read-Only Memory, ROM for short), a random access memory (Random Access Memory, RAM for short), a magnetic disk, or an optical disk.

Finally, it should be noted that the foregoing embodiments are merely intended for describing the technical solutions of the present application rather than limiting the present application. Although the present application is described in detail with reference to the foregoing embodiments, persons of ordinary skill in the art should understand that modifications may still be made to the technical solutions described in the foregoing embodiments, or equivalent replacements may still be made to some technical features thereof, without departing from the spirit and scope of the technical solutions of the embodiments of the present application.

## Claims

1. A method for reporting uplink control information, comprising:
determining, by a terminal, uplink control information needing to be reported, wherein the uplink control information comprises uplink control information needing to be reported currently and uplink control information that needs to be reported previously but has not been reported and is stored by the terminal; and
when the uplink control information fails to be reported completely, reporting, by the terminal, partial control information of the uplink control information to a base station according to priority information of the uplink control information, and storing control information that has not been reported in the uplink control information.

2. The method according to claim 1, wherein the uplink control information needing to be reported that is determined by the terminal comprises at least one of CSI, scheduling request information of uplink data and feedback information of downlink data.

3. The method according to claim 1 or 2, wherein the uplink control information needing to be reported that is determined by the terminal comprises at least one set of CSI; the uplink control information needing to be reported currently comprises CSI needing to be reported on a current sub-frame, and the uplink control information that needs to be reported previously but has not been reported and is stored by the terminal comprises CSI that needs to be reported on another sub-frame before the current sub-frame but has not been reported and is stored by the terminal; and the reporting, by the terminal, partial control information of the uplink control information to a base station according to priority information of the uplink control information, and storing control information that has not been reported in the uplink control information comprises:
reporting, by the terminal, at least one information combination of the at least one set of CSI to the base station through a PUCCH according to priority information of the at least one set of CSI, and storing other information, except the at least one information combination, which has not been reported in the at least one set of CSI.

4. The method according to any one of claims 1 to 3, wherein before the reporting, by the terminal, partial control information of the uplink control information to a base station according to priority information of the uplink control information, the method further comprises:
obtaining, by the terminal, the priority information of the uplink control information.

5. The method according to claim 4, wherein the obtaining, by the terminal, the priority information of the uplink control information comprises:
receiving, by the terminal, the priority information of the uplink control information, wherein the priority information is sent by the base station.

6. The method according to any one of claims 1 to 5, further comprising:
obtaining, by the terminal, time information, wherein the time information is used for indicating a time length for storing the control information that has not been reported in the uplink control information.

7. The method according to claim 6, wherein the obtaining, by the terminal, time information comprises:
receiving, by the terminal, the time information sent by the base station.

8. The method according to claim 6 or 7, wherein after the storing, by the terminal, control information that has not been reported in the uplink control information, the method further comprises:
dropping, by the terminal according to the time information, the control information that has not been reported in the uplink control information and is stored.

9. The method according to any one of claims 6 to 8, wherein the uplink control information comprises at least one of CSI, the scheduling request information of the uplink data and the feedback information of the downlink data; and the time information corresponds to information comprised in the uplink control information.

10. The method according to claim 9, wherein the uplink control information comprises the CSI; and the time information further corresponds to an information combination corresponding to the CSI.

11. The method according to claim 9 or 10, wherein the uplink control information comprises the CSI; and the time information further corresponds to an information type comprised in the CSI.

12. The method according to any one of claims 1 to 11, wherein before the storing, by the terminal, control information that has not been reported in the uplink control information, the method further comprises:
obtaining, by the terminal, indication information, wherein the indication information is used for instructing to store the control information that has not been reported in the uplink control information.

13. The method according to claim 12, wherein the obtaining, by the terminal, indication information comprises:
receiving, by the terminal, the indication information sent by the base station.

14. A method for reporting uplink control information, comprising:
determining, by a base station, uplink control information needing to be reported by a terminal, wherein the uplink control information comprises uplink control information needing to be reported currently and uplink control information that needs to be reported previously but has not been reported and is stored by the terminal; and
when the uplink control information fails to be reported completely, receiving, by the base station according to priority information of the uplink control information, partial control information reported by the terminal in the uplink control information, and determining control information that has not been reported in the uplink control information and is stored by the terminal.

15. The method according to claim 14, wherein the uplink control information, needing to be reported by the terminal, that is determined by the base station comprises at least one of CSI, scheduling request information of uplink data and feedback information of downlink data.

16. The method according to claim 14 or 15, wherein the uplink control information, needing to be reported by the terminal, that is determined by the base station comprises at least one set of CSI; the uplink control information needing to be reported currently comprises CSI needing to be reported on a current sub-frame, and the uplink control information that needs to be reported previously but has not been reported and is stored by the terminal comprises CSI that needs to be reported on another sub-frame before the current sub-frame but has not been reported and is stored by the terminal; and the receiving, by the base station according to priority information of the uplink control information, partial control information reported by the terminal in the uplink control information, and determining control information that has not been reported in the uplink control information and is stored by the terminal comprises:
receiving, by the base station according to priority information of the at least one set of CSI, at least one information combination of the at least one set of CSI, wherein the at least one information combination is reported by the terminal through a PUCCH, and determining other information, except the at least one information combination, which has not been reported in the at least one set of CSI and is stored by the terminal.

17. The method according to any one of claims 14 to 16, wherein before the receiving, by the base station according to priority information of the uplink control information, partial control information reported by the terminal in the uplink control information, the method further comprises:
sending, by the base station, the priority information of the uplink control information to the terminal.

18. The method according to any one of claims 14 to 17, wherein before, when or after the determining, by the base station, control information that has not been reported in the uplink control information and is stored by the terminal, the method further comprises:
sending, by the base station, time information to the terminal, wherein the time information is used for indicating a time length for storing the control information that has not been reported in the uplink control information, so that the terminal drops, according to the time information, the control information that has not been reported in the uplink control information and is stored.

19. The method according to claim 18, wherein the uplink control information comprises at least one of CSI, the scheduling request information of the uplink data and the feedback information of the downlink data; and the time information corresponds to information comprised in the uplink control information.

20. The method according to claim 19, wherein the uplink control information comprises the CSI; and the time information further corresponds to an information combination corresponding to the CSI.

21. The method according to claim 19 or 20, wherein the uplink control information comprises the CSI; and the time information further corresponds to an information type comprised in the CSI.

22. The method according to any one of claims 14 to 21, wherein before the determining, by the base station, control information that has not been reported in the uplink control information and is stored by the terminal, the method further comprises:
sending, by the base station, indication information to the terminal, wherein the indication information is used for instructing the terminal to store the control information that has not been reported in the uplink control information.

23. A terminal, comprising:
a determining unit, configured to determine uplink control information needing to be reported, wherein the uplink control information comprises uplink control information needing to be reported currently and uplink control information that needs to be reported previously but has not been reported and is stored by the terminal;
a processing unit, configured to: when the uplink control information determined by the determining unit fails to be reported completely, determine, according to priority information of the uplink control information, partial control information reported in the uplink control information, and determine control information that has not been reported in the uplink control information;
a sending unit, configured to report the partial control information determined by the processing unit in the uplink control information to a base station; and
a storage unit, configured to store the control information that has not been reported in the uplink control information and is determined by the processing unit.

24. The terminal according to claim 23, wherein the uplink control information that needs to be reported and is determined by the determining unit comprises at least one of CSI, scheduling request information of uplink data and feedback information of downlink data.

25. The terminal according to claim 23 or 24, wherein the uplink control information that needs to be reported and is determined by the determining unit comprises at least one set of CSI; the uplink control information needing to be reported currently comprises CSI needing to be reported on a current sub-frame, and the uplink control information that needs to be reported previously but has not been reported and is stored by the terminal comprises CSI that needs to be reported on another sub-frame before the current sub-frame but has not been reported and is stored by the terminal;
the processing unit is specifically configured to determine, according to priority information of the at least one set of CSI, at least one information combination reported in the at least one set of CSI, and determine other information, except the at least one information combination, which has not been reported in the at least one set of CSI;
the sending unit is specifically configured to report the at least one information combination determined by the processing unit in the at least one set of CSI to the base station through a PUCCH; and
the storage unit is specifically configured to store the other information, except the at least one information combination, which has not been reported in the at least one set of CSI and is determined by the processing unit.

26. The terminal according to any one of claims 23 to 25, wherein the terminal further comprises a receiving unit, configured to:
obtain the priority information of the uplink control information.

27. The terminal according to claim 26, wherein the receiving unit is specifically configured to:
receive the priority information of the uplink control information, wherein the priority information is sent by the base station.

28. The terminal according to claim 26 or 27, wherein the receiving unit is further configured to:
obtain time information, wherein the time information is used for indicating a time length for storing the control information that has not been reported in the uplink control information.

29. The terminal according to claim 28, wherein the receiving unit is specifically configured to:
receive the time information sent by the base station.

30. The terminal according to claim 28 or 29, wherein the processing unit is further configured to:
instruct, according to the time information, the storage unit to drop the control information that has not been reported in the uplink control information and is stored.

31. The terminal according to any one of claims 28 to 30, wherein the uplink control information comprises at least one of CSI, the scheduling request information of the uplink data and the feedback information of the downlink data; and the time information corresponds to information comprised in the uplink control information.

32. The terminal according to claim 31, wherein the uplink control information comprises the CSI; and the time information further corresponds to an information combination corresponding to the CSI.

33. The terminal according to claim 31 or 32, wherein the uplink control information comprises the CSI; and the time information further corresponds to an information type comprised in the CSI.

34. The terminal according to any one of claims 26 to 33, wherein the receiving unit is further configured to:
obtain indication information, wherein the indication information is used for instructing to store the control information that has not been reported in the uplink control information.

35. The terminal according to claim 34, wherein the receiving unit is specifically configured to:
receive the indication information sent by the base station.

36. A base station, comprising:
a determining unit, configured to determine uplink control information needing to be reported by a terminal, wherein the uplink control information comprises uplink control information needing to be reported currently and uplink control information that needs to be reported previously but has not been reported and is stored by the terminal;
a processing unit, configured to: when the uplink control information determined by the determining unit fails to be reported completely, determine, according to priority information of the uplink control information, partial control information reported in the uplink control information, and determine control information that has not been reported in the uplink control information and is stored by the terminal; and
a receiving unit, configured to receive, according to the partial control information determined by the processing unit in the uplink control information, partial control information reported by the terminal in the uplink control information.

37. The base station according to claim 36, wherein the uplink control information that needs to be reported by the terminal and is determined by the determining unit comprises at least one of CSI, scheduling request information of uplink data and feedback information of downlink data.

38. The base station according to claim 36 or 37, wherein the uplink control information that needs to be reported by the terminal and is determined by the determining unit comprises at least one set of CSI; the uplink control information needing to be reported currently comprises CSI needing to be reported on a current sub-frame, and the uplink control information that needs to be reported previously but has not been reported and is stored by the terminal comprises CSI that needs to be reported on another sub-frame before the current sub-frame but has not been reported and is stored by the terminal;
the processing unit is specifically configured to determine, according to priority information of the at least one set of CSI, at least one information combination reported in the at least one set of CSI, and determine other information, except the at least one information combination, which has not been reported in the at least one set of CSI;
the receiving unit is specifically configured to receive, according to the at least one information combination reported in the at least one set of CSI and determined by the processing unit, at least one information combination of the at least one set of CSI, wherein the at least one information combination is reported by the terminal through a PUCCH; and
the determining unit is specifically configured to determine, according to the other information, except the at least one information combination, which has not been reported in the at least one set of CSI and is determined by the processing unit, other information, except the at least one information combination, which has not been reported in the at least one set of CSI and is stored by the terminal.

39. The base station according to any one of claims 36 to 38, wherein the base station further comprises a sending unit, configured to:
send the priority information of the uplink control information to the terminal.

40. The base station according to claim 39, wherein the sending unit is further configured to:
send time information to the terminal, wherein the time information is used for indicating a time length for storing the control information that has not been reported in the uplink control information, so that the terminal drops, according to the time information, the control information that has not been reported in the uplink control information and is stored.

41. The base station according to claim 40, wherein the uplink control information comprises at least one of CSI, the scheduling request information of the uplink data and the feedback information of the downlink data; and the time information corresponds to information comprised in the uplink control information.

42. The base station according to claim 41, wherein the uplink control information comprises the CSI; and the time information further corresponds to an information combination corresponding to the CSI.

43. The base station according to claim 41 or 42, wherein the uplink control information comprises the CSI; and the time information further corresponds to an information type comprised in the CSI.

44. The base station according to any one of claims 39 to 43, wherein the sending unit is further configured to:
send indication information to the terminal, wherein the indication information is used for instructing the terminal to store the control information that has not been reported in the uplink control information.

45. A terminal, comprising:
a processor, configured to determine uplink control information needing to be reported, wherein the uplink control information comprises uplink control information needing to be reported currently and uplink control information that needs to be reported previously but has not been reported and is stored by the terminal; and when the uplink control information fails to be reported completely, determine, according to priority information of the uplink control information, partial control information reported in the uplink control information, and determine control information that has not been reported in the uplink control information;
a transmitter, configured to report the partial control information determined by the processor in the uplink control information to a base station; and
a memory, configured to store the control information that has not been reported in the uplink control information and is determined by the processor.

46. The terminal according to claim 45, wherein the uplink control information that needs to be reported and is determined by the processor comprises at least one of CSI, scheduling request information of uplink data and feedback information of downlink data.

47. The terminal according to claim 45 or 46, wherein the uplink control information that needs to be reported and is determined by the processor comprises at least one set of CSI; the uplink control information needing to be reported currently comprises CSI needing to be reported on a current sub-frame, and the uplink control information that needs to be reported previously but has not been reported and is stored by the terminal comprises CSI that needs to be reported on another sub-frame before the current sub-frame but has not been reported and is stored by the terminal;
the processor is specifically configured to determine, according to priority information of the at least one set of CSI, at least one information combination reported in the at least one set of CSI, and determine other information, except the at least one information combination, which has not been reported in the at least one set of CSI;
the transmitter is specifically configured to report the at least one information combination determined by the processor in the at least one set of CSI to the base station through a PUCCH; and
the memory is specifically configured to store the other information, except the at least one information combination, which has not been reported in the at least one set of CSI and is determined by the processor.

48. The terminal according to any one of claims 45 to 47, wherein the terminal further comprises a receiver, configured to:
obtain the priority information of the uplink control information.

49. The terminal according to claim 48, wherein the receiver is specifically configured to:
receive the priority information of the uplink control information, wherein the priority information is sent by the base station.

50. The terminal according to claim 48 or 49, wherein the receiver is further configured to:
obtain time information, wherein the time information is used for indicating a time length for storing the control information that has not been reported in the uplink control information.

51. The terminal according to claim 50, wherein the receiver is specifically configured to:
receive the time information sent by the base station.

52. The terminal according to claim 50 or 51, wherein the processor is further configured to:
instruct, according to the time information, the memory to drop the control information that has not been reported in the uplink control information and is stored.

53. The terminal according to any one of claims 50 to 52, wherein the uplink control information comprises at least one of CSI, the scheduling request information of the uplink data and the feedback information of the downlink data; and the time information corresponds to information comprised in the uplink control information.

54. The terminal according to claim 53, wherein the uplink control information comprises the CSI; and the time information further corresponds to an information combination corresponding to the CSI.

55. The terminal according to claim 53 or 54, wherein the uplink control information comprises the CSI; and the time information further corresponds to an information type comprised in the CSI.

56. The terminal according to any one of claims 48 to 55, wherein the receiver is further configured to:
obtain indication information, wherein the indication information is used for instructing to store the control information that has not been reported in the uplink control information.

57. The terminal according to claim 56, wherein the receiver is specifically configured to:
receive the indication information sent by the base station.

58. A base station, comprising:
a processor, configured to determine uplink control information needing to be reported by a terminal, wherein the uplink control information comprises uplink control information needing to be reported currently and uplink control information that needs to be reported previously but has not been reported and is stored by the terminal, and configured to: when the uplink control information fails to be reported completely, determine, according to priority information of the uplink control information, partial control information reported in the uplink control information, and determine control information that has not been reported in the uplink control information and is stored by the terminal; and
a receiver, configured to receive, according to the partial control information determined by the processor in the uplink control information, partial control information reported by the terminal in the uplink control information.

59. The base station according to claim 58, wherein the uplink control information that needs to be reported by the terminal and is determined by the processor comprises at least one of CSI, scheduling request information of uplink data and feedback information of downlink data.

60. The base station according to claim 58 or 59, wherein the uplink control information that needs to be reported by the terminal and is determined by the processor comprises at least one set of CSI; the uplink control information needing to be reported currently comprises CSI needing to be reported on a current sub-frame, and the uplink control information that needs to be reported previously but has not been reported and is stored by the terminal comprises CSI that needs to be reported on another sub-frame before the current sub-frame but has not been reported and is stored by the terminal;
the processor is specifically configured to determine, according to priority information of the at least one set of CSI, at least one information combination reported in the at least one set of CSI, and determine other information, except the at least one information combination, which has not been reported in the at least one set of CSI;
the receiver is specifically configured to receive, according to the at least one information combination reported in the at least one set of CSI and determined by the processor, at least one information combination of the at least one set of CSI, wherein the at least one information combination is reported by the terminal through a PUCCH; and
the processor is specifically configured to determine, according to the other information, except the at least one information combination, which has not been reported in the at least one set of CSI and is determined by the processor, other information, except the at least one information combination, which has not been reported in the at least one set of CSI and is stored by the terminal.

61. The base station according to any one of claims 58 to 60, wherein the base station further comprises a transmitter, configured to:
send the priority information of the uplink control information to the terminal.

62. The base station according to claim 61, wherein the transmitter is further configured to:
send time information to the terminal, wherein the time information is used for indicating a time length for storing the control information that has not been reported in the uplink control information, so that the terminal drops, according to the time information, the control information that has not been reported in the uplink control information and is stored.

63. The base station according to claim 62, wherein the uplink control information comprises at least one of CSI, the scheduling request information of the uplink data and the feedback information of the downlink data; and the time information corresponds to information comprised in the uplink control information.

64. The base station according to claim 63, wherein the uplink control information comprises the CSI; and the time information further corresponds to an information combination corresponding to the CSI.

65. The base station according to claim 63 or 64, wherein the uplink control information comprises the CSI; and the time information further corresponds to an information type comprised in the CSI.

66. The base station according to any one of claims 61 to 65, wherein the transmitter is further configured to:
send indication information to the terminal, wherein the indication information is used for instructing the terminal to store the control information that has not been reported in the uplink control information.
